# EUROPEAN PATENT SPECIFICATION

(11) **EP 1 205 942 B1**
(45) Date of publication and mention of the grant of the patent: **19.01.2011**
(21) Application number: 00946422.3
(22) Date of filing: 19.07.2000
(51) Int. Cl.: H01M 8/10, H01B 1/12

(54) **PROTON CONDUCTING MATERIAL AND METHOD FOR PREPARING THE SAME, AND ELECTROCHEMICAL DEVICE USING THE SAME**
PROTONEN LEITENDES MATERIAL UND VERFAHREN ZUR HERSTELLUNG DESSELBEN, FERNER DIESES MATERIAL VERWENDENDE, ELEKTROCHEMISCHE VORRICHTUNG
MATERIAU CONDUCTEUR DE PROTONS, PROCEDE DE PREPARATION ASSOCIE, ET DISPOSITIF ELECTROCHIMIQUE UTILISANT LEDIT MATERIAU

(30) Priority: 19.07.1999 JP 20403899; 03.03.2000 JP 2000058116; 29.05.2000 JP 2000157509
(43) Date of publication of application: 15.05.2002
(73) Proprietor: Sony Corporation, Tokyo (JP)
(72) Inventor: Hinokuma, Koichiro Sony Corporation, Tokyo 141-0001 (JP); PIETZAK, Bjoern Sony Corporation, Tokyo 141-0001 (JP); ROST, Constance Sony Corporation, Tokyo 141-0001 (JP); ATA, Masafumi Sony Corporation, Tokyo 141-0001 (JP)
(74) Representative: Müller - Hoffmann & Partner
(86) International application number: PCT/JP2000/004864
(87) International publication number: WO 2001/006519

(56) References cited:
- JP-A- 3 167 712
- JP-A- 2000 256 007
- US-A- 5 294 732
- CHIANG L Y ET AL: "EFFICIENT SYNTHESIS OF POLYHYDROXYLATED FULLERENE DERIVATIVES VIA HYDROLYSIS OF POLYCYCLOSULFATED PRECURSORS" JOURNAL OF ORGANIC CHEMISTRY, AMERICAN CHEMICAL SOCIETY. EASTON, US, vol. 59, no. 14, 1994, pages 3960-3968, XP002950759 ISSN: 0022-3263
- PATENT ABSTRACTS OF JAPAN vol. 015, no. 408 (E-1123), 17 October 1991 (1991-10-17) -& JP 03 167712 A (AGENCY OF IND SCIENCE & TECHNOL; others: 01), 19 July 1991 (1991-07-19)

## Description

### Technical Field

The present invention relates to a proton (H⁺) conductor, a production method thereof, and an electrochemical device using the proton conductor.

### Background Art

In recent years, as a polymer solid-state electrolyte type fuel cell which has been used to power cars, there has been known a fuel cell using a polymer material having a proton (hydrogen ionic) conductivity such as a perfluorosulfonate resin (for example, Nafion ® produced by Du Pont).

As a relatively new proton conductor, there has also been known a polymolybdate having large amount of hydrated water such as H₃Mo₁₂PO₄₀ • 29H₂O or an oxide having a large amount of hydrated water such as Sb₂O₆ • 5.4H₂O.The above-described polymer material and hydrated compounds each exhibit, if placed in a wet state, a high proton conductivity at a temperature near ordinary temperature.

For example, the reason why the perfluorosulfonate resin can exhibit a very high proton conductivity even at ordinary temperature is that protons ionized from sulfonate groups of the resin are bonded (hydrogen-bonded) with moisture already entrapped in a polymer matrix in a large amount, to produce protonated water, that is oxonium ions (H₃O⁺), and the protons in the form of the oxonium ions can smoothly migrate in the polymer matrix.

More recently, there has been also developed a proton conductor having a conduction mechanism quite different from that of each of the above-described proton conductors.

That is to say, it has been found that a composite metal oxide having a perovskite structure such as SrCeO₃ doped with Yb exhibits a proton conductivity without use of moisture as a migration medium. The conduction mechanism of this composite metal oxide has been considered such that protons are conducted while being singly channeled between oxygen ions forming a skeleton of the perovskite structure.

The conductive protons, however, are not originally present in the composite metal oxide but are produced by the following mechanism: namely, when the perovskite structure contacts the steam contained in an environmental atmospheric gas, water molecules at a high temperature react with oxygen deficient portions which have been formed in the perovskite structure by doping Yb or the like, to generate protons.

The above-described various proton conductors, however, have the following problems.

The matrix material such as the above-identified perfluorosulfonate resin must be continuously placed in a sufficiently wet state during use in order to keep a high proton conductivity.

Accordingly, a configuration of a system, such as, a fuel cell using such a matrix material, requires a humidifier and various accessories, thereby giving rise to problems in enlarging the scale of the system and raising the cost of the system.

The system using the matrix material has a further problem that the range of the operational temperature must be limited for preventing the freezing or boiling of the moisture contained in the matrix.

The composite metal oxide having the perovskite structure has a problem that the operational temperature must be kept at a high temperature of 500°C or more for ensuring an effective proton conductivity.

In this way, the related art proton conductors have the problems that the atmosphere dependence on the performance of each conductor becomes high, and more specifically, moisture or stream must be supplied to the conductor to ensure the performance of the conductor, and further, the operational temperature of the conductor is excessively high or the range of the operational temperature is limited. Chiang L.Y. et al., (J. Org. Chem. 1994, 59, 3960-3968) discloses an efficient synthesis of polyhydroxylated fullerene derivates via hydrolysis of polycyclosulfated precursors.

US 5,294,732 discloses polysubstituted fullerene moieties having a plurality of substituents thereon, wherein the substituents are selected from the group comprising among others the hydroxyl group.

JP 03 167712 A discloses light carbonaceous solid electrolytic composed of the sulfonated carbonaceous material obtained by treatment with a sulfonating agent. Carbonaceous mesoface and raw coke manufactured by a thermal treatment of pitch class, which is one of the heavy bituminous material, are desirably used as the raw material of the solid electrolyte.

### Disclosure of the Invention

A first object of the present invention is to provide an electrochemical device employing a proton conductor which is usable in a wide temperature range including ordinary temperature and has a low atmosphere dependence, that is, it requires no moisture despite whether or not the moisture is a migration medium :

A second object of the present invention is to provide an electrochemical device employing a proton conductor which exhibits a film formation ability while keeping the above-described performance, to be thereby usable as a thin film having a high strength, a gas permeation preventive or impermeable performance, and a good proton conductivity.

These objects are solved by the device of claim 1. There is provided a proton conductor comprising a carbonaceous material essentially comprising a carbon, into which proton dissociating groups are introduced.

There is further provided a method of producing a proton conductor, comprising the step of introducing proton dissociating groups into a carbonaceous material essentially comprising a carbon.

The present invention also provides an electrochemical device comprising a first electrode, a second electrode, and a proton conductor that is positioned between the first and second electrodes, the proton conductor comprising a carbonaceous material essentially comprising a carbon, into which proton dissociating groups are introduced.

According to the proton conductor, since the conductor essentially comprises the carbonaceous material having a proton dissociating capability, protons are easily transferred or conducted, even in a dry state, and further, the protons can exhibit a high conductivity in a wide temperature range (at least in a range of about 160°C to -40°C) that includes ordinary temperatures. While the proton conductor has a sufficient proton conductivity even in a dry state, it can also have a proton conductivity in a wet state. The moisture may come from the outside.

According to the electrochemical device of the present invention, since the proton conductor is held between the first and second electrodes, the electrochemical device can eliminate the need for a humidifier and the like which are necessary for known fuel cells that require moisture as a migration medium so as to enhance proton conductivity. Therefore, the device construction of the present invention has an advantageously smaller and more simplified construction.

### Brief Description of the Drawings

Figs. 1A and 1B are views showing a structure of a polyhydroxylated fullerene molecule as one example of a fullerene derivative of the present invention;
Figs. 2A, 2B, and 2C illustrate examples of the fullerene derivative into which proton dissociating groups are introduced;
Figs. 3A and 3B illustrate examples of fullerene molecules;
Fig. 4 shows examples of carbon clusters essentially comprising in a proton conductor of the present invention;
Fig. 5 shows further examples of carbon clusters that have partial fullerene structures;
Fig. 6 shows still further examples of carbon clusters that have diamond structures;
Fig. 7 shows additional examples of carbon clusters which are bonded to each other;
Fig. 8 is a schematic view of an example of a proton conductor of the present invention;
Fig. 9 is a schematic configuration view showing a fuel cell;
Fig. 10 is a schematic configuration view of a hydrogen-air cell;
Fig. 11 is a schematic configuration view of an electrochemical device;
Fig. 12 is a schematic configuration view of another electrochemical device;
Figs. 13A and 13B each illustrate examples of tubular carbonaceous materials of the present invention as base or raw materials of the proton conductor of the present invention;
Fig. 14 illustrates a tubular carbonaceous material derivative of the present invention;
Fig. 15 is a schematic view of the tubular carbonaceous material derivative;
Fig. 16 is a schematic view of another tubular carbonaceous material derivative;
Figs. 17A and 17B are diagrams depicting equivalent circuits of experimental pellets used in the inventive example;
Fig. 18 is a graph showing a result of measuring the complex impedance of a pellet;
Fig. 19 is a graph showing a temperature dependence on the proton conductivity of the pellet;
Fig. 20 is a diagram showing results of the generating electricity experiment using the fullerene derivative in Inventive Example 1;
Fig. 21 is a graph showing a result of measuring the complex impedance of a pellet in Inventive Example 4 and a pellet in Comparative Example 2;
Fig. 22 is a graph showing a temperature dependence on the proton conductivity of the pellet;
Fig. 23 is a graph showing a TOF-MS spectrum of a carbon powder produced by an arc discharge process using a carbon electrode in Inventive Example 8; and
Fig. 24 is a graph that depicts the measurement of a complex impedance of a film used in an inventive example in which a tubular carbonaceous material is used.

### Best Mode for Carrying Out the Invention

Hereinafter, a proton conductor and a method of producing the proton conductor to which the present invention has been applied, and an electrochemical device using the proton conductor will be described in detail with reference to the accompanying drawings.

A proton conductor according to an embodiment of the present invention essentially comprises a carbonaceous material essentially comprising a carbon, into which proton dissociating groups are introduced. In this description, "dissociation of proton (H+)" means "dissociation of proton from functional groups in reaction to ionization", and "proton dissociating groups" means "functional groups capable of transferring protons in reaction to ionization".

In such a proton conductor, protons are migrated between the proton dissociating groups to manifest ionic conductivity.

As the fullerene derivative, any suitable material may be used provided that it is mainly composed of carbon. It is however necessary that ion conduction after introducing proton dissociating groups is larger than electron conduction.

The fullerene derivative, as a matrix fullerene derivative, may specifically be enumerated by carbon clusters, as aggregates of carbon atoms, and a carbonaceous material containing a diamond structure.

There are a variety of carbon clusters. Of these, fullerene, a fullerene structure at least a portion of which has an open end, and a carbonaceous tubular material, or so-called carbon nano-tube, are preferred.

These materials are, of course, merely illustrative, since any suitable material which will satisfy the above conditions that ion conduction after introducing proton dissociating groups is higher than electron conductivity.

In the following, certain typical application of the present invention to exemplary carbonaceous materials is explained.

First, an example of using fullerene as the carbonaceous material is explained.

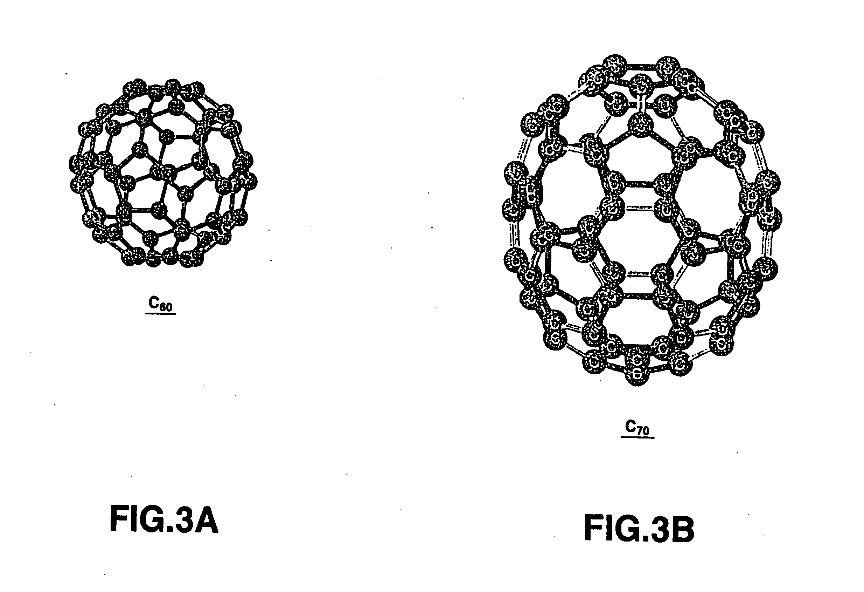

According to this embodiment, the kind of fullerene molecule or molecules used as a base material for the fullerene derivative to which proton dissociating groups are introduced is not particularly limited insofar as the fullerene molecules are characterized as a spherical carbon cluster or carbon clusters that generally include the C₃₆, C₆₀ (see Fig. 3A), C₇₀ (see Fig. 3B), C₇₆, C₇₈, C₈₀, C₈₂, and C₈₄ fullerene molecules. It should be noted that a mixture of these fullerene molecules or other like fullerene molecules may also be used as the base material of the fullerene derivative.

The fullerene molecule was found in the mass spectrum of a beam of a carbon cluster created by laser abrasion of graphite in 1985. (H. W. Kroto, J. R. Heath, S. C. O'Brien, R. F. Curl and R. E. Smalley, Nature, 318,162 (1985)).

The method of producing the fullerene molecules by arc discharge of a carbon electrode was established five years later in 1990. Ever since the establishment of the practical production method, the fullerene molecules have become a focus of attention as a carbon-based semiconductor material or the like.

The present invention has uniquely and advantageously examined the proton conductivities of derivatives of these fullerene molecules, and found that a polyhydroxylated fullerene obtained by introducing hydroxyl groups to a number of carbon atoms of a fullerene molecule or molecules exhibits, even in a dry state, a high proton conductivity in a wide temperature range including an ordinary temperature region, that is, a temperature range from less than the freezing point of water to more than the boiling point of water (at least -40AC to 160°C), and further found that the proton conductivity becomes higher when hydrogensulfate ester groups, namely, -OSO₃H groups, are introduced, in place of the hydroxyl groups, to the fullerene molecule or molecules.

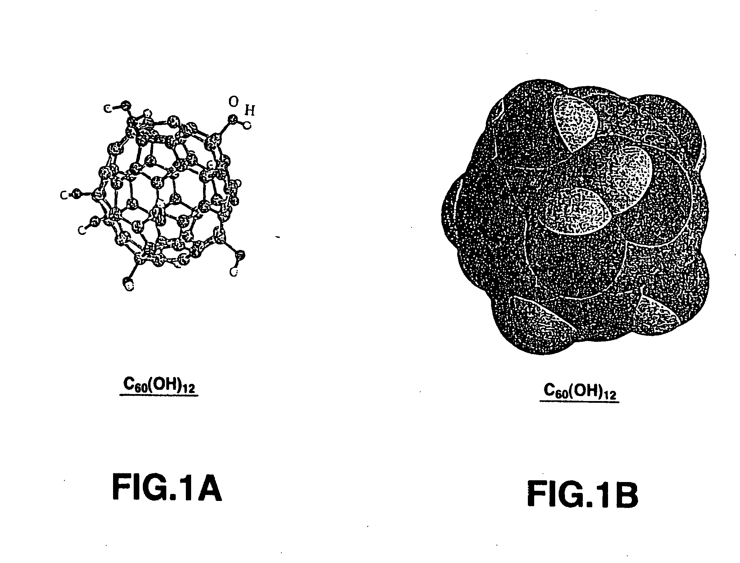

To be more specific, the polyhydroxylated fullerene or fullerenol is a generic name of a fullerene-based compound that has a structure in which a plurality of hydroxyl groups are added to the fullerene molecule or molecules as shown in Figs. 1A and 1B. Of course, with respect to the number, arrangement, and the like of the hydroxyl groups of the fullerene molecule, some variations can be considered. The first synthesis example of the polyhydroxylated fullerene has been reported by Chiang, et al. in 1992. (L. Y. Chiang, J. W. Swirczewski, C. S. Hsu, S. K. Chowdhury, S. Cameron and K. Creengan, J. Chem. Soc, Chem. Commun., 1791 (1992)). Since this report, the polyhydroxylated fullerene that contains a specific amount or more of the hydroxyl groups has become a focus of attention, particularly, in terms of its water-soluble ability, and has been studied mainly in the biotechnological field.

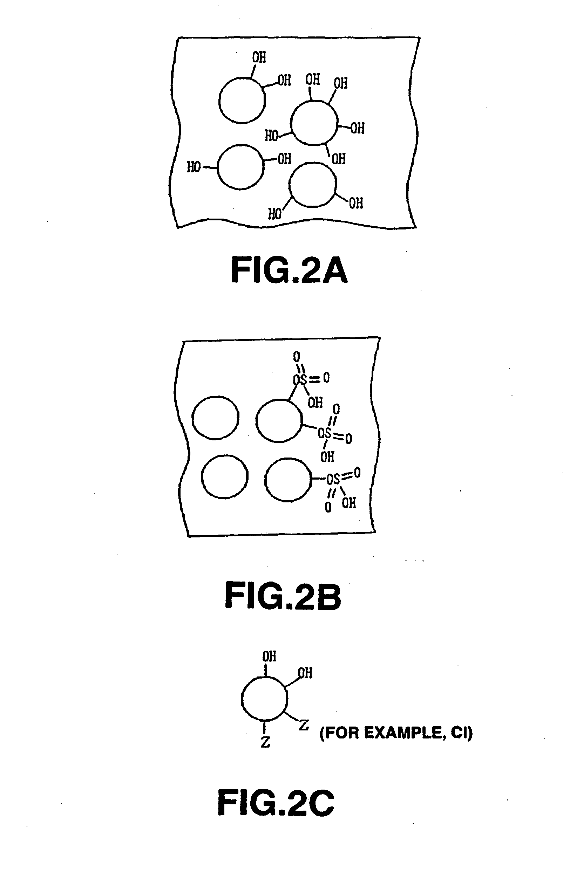

In an embodiment, the present invention has newly discovered that a fullerene derivative can be formed from an aggregate of the polyhydroxylated fullerene molecules, as schematically shown in Fig. 2A, in which the hydroxyl groups of each of these molecules adjacent to each other (in the figure, ○ designates the polyhydroxylated fullerene molecule) act on each other, thereby exhibiting a high proton conductivity (that is, a high transferability of H⁺ between the phenolic hydroxyl groups of the polyhydroxylated fullerene molecule or molecules) within the bulk or aggregate of the polyhydroxylated fullerene molecules.

As the proton conductor in this embodiment, the aggregate of fullerene molecules wherein each or a number of the molecules have a plurality of -OSO₃H groups may be used in place of the aggregate of polyhydroxylated fullerene molecules as previously discussed. The fullerene-based compound in which the OH groups are replaced with the -OSO₃H groups as show in Fig. 2B, that is, a hydrogensulfate-esterificated fullerenol (polyhydroxyl hydrogen sulfated fullerene) was reported by Chiang, et al. in 1994. (L. Y. Chiang, L. Y. Wang, J. W. Swirczewski, S. Soled and S. Cameron, J. Org. Chem. 59, 3960 (1994)). The molecules of polyhydroxyl hydrogen sulfated fullerene may contain only the -OSO₃H groups or contain a number of the -OSO₃H groups and a number of the hydroxyl groups.

In the case of preparing the fullerene derivative of the present invention, an aggregate of a large number of fullerene derivative molecules that contain the hydroxyl groups or -OSO₃H groups or combinations thereof is prepared. Since the protons derived from a large amount of hydroxyl groups or -OSO₃H groups or combinations thereof that are originally contained in the molecules directly migrate, the proton conductivity of the bulk or aggregate of these fullerene molecules is self-determined without the need of entrapment of hydrogen resulting from steam molecules or protons from an atmosphere and also without the need of supply of water from an external environment, particularly, the need of absorption of water or the like from atmospheric air. In other words, the proton conductivity of the aggregate of the fullerene derivative molecules that contain the functional groups is not limited by the environmental atmosphere.

Further, the fullerene molecules as the base material of the fullerene derivative particularly have an electrophilic property, which property may allow not only the -OSO₃H groups having a high acidity but also the hydroxyl groups to largely promote the ionization of hydrogen. This is one of the reasons why the proton conductor of an embodiment of the present invention exhibits an excellent proton conductivity.

According to the proton conductor of an embodiment of the present invention, since a large amount of hydroxyl groups or -OSO₃H groups or combinations thereof can be introduced to each or a number of the fullerene molecules of the fullerene derivative, the numerical density of protons related to conductivity per unit volume of the conductor becomes very large. This is another reason why the proton conductor in this embodiment exhibits an effective conductivity.

Since the fullerene molecule or molecules of the fullerene derivative of the proton conductor in this embodiment are mostly or substantially composed of carbon atoms, the fullerene derivative is light in weight, not easily decomposed, and relatively pure, that is, relatively free of contaminants that may negatively impact its desirable proton conductivity properties. In addition, the cost that is required to produce the fullerene derivative has been rapidly lowered. Accordingly, the fullerene derivative may be regarded as a desirable carbonaceous material based on resource, environmental, economic or other desirable considerations as previously discussed.

As a result of the present invention, it is further discovered that the proton dissociating groups, as discussed above, are not limited to the hydroxyl or -OSO₃H functional groups.

To be more specific, the proton dissociating groups can be expressed by a chemical formula of -XH where X is an arbitrary atom or atomic group having a bivalent bond, and further the group can be expressed by a chemical formula of -OH or -YOH where Y is an arbitrary atom or atomic group having a bivalent bond.

In particular, the proton dissociating groups are preferably at least one of the -OH and -OSO₃H, and -COOH, -SO₃H and -OPO(OH)₃ functional groups.

According to this embodiment, electron attractive groups, such as, nitro groups, carbonyl groups and carboxyl groups, nitrile groups, alkyl halide groups or halogen atoms (fluorine or chlorine atoms) may be preferably introduced together with the proton dissociating groups, to carbon atoms of the fullerene molecule or molecules. Fig. 2C shows a fullerene molecule to which Z is introduced in addition to -OH, where Z represents at least one of the -NO₂, -CN, -F, -Cl,-COOR, -CHO, -COR, -CF₃, or -SO₃CF₃ (R is an alkyl group) electron attractive groups. With the presence of the electron attractive groups in addition to the functional groups, it is easy for protons to be released from the proton dissociating groups and be transferred between the functional groups by the electron attractive effect of the electron attractive groups.

According to this embodiment, the number of the proton dissociating groups can be freely selected insofar as it is less than the number of the carbon atoms of the fullerene molecule or molecules, and preferably may include 5 functional groups or more. To keep the π electron characteristic of the fullerene molecule for achieving the effective electron attractive ability, the number of functional groups is more preferably half or less than half of the number of carbon atoms of a fullerene molecule or molecules.

To synthesize the above-described fullerene derivative used for the proton conductor of an embodiment, as will be described later with reference to examples, desired proton dissociating groups may be introduced to carbon atoms of each or a number of the fullerene molecules of the fullerene derivative by subjecting a powder of the fullerene molecules to known treatments, such as, acid treatment and hydrolysis suitably in combination.

After treatment, the powder of the fullerene derivative thus obtained can be compacted into a desired shape, for example, into a pellet. The compacting of the powder can be performed without use of any binder, which is effective to enhance the proton conductivity and to reduce the weight of the proton conductor, resulting in a molded material that substantially contains the fullerene derivative.

The proton conductor in this embodiment can be suitably used for various electrochemical devices. For example, the present invention can be preferably applied to an electrochemical device having a basic structure that includes first and second electrodes and a proton conductor held therebetween, wherein the proton conductor is configured as the proton conductor in this embodiment.

To be more specific, the proton conductor in this embodiment can be preferably applied to an electrochemical device in which at least one of the first and second electrodes is a gas electrode, or an electrochemical device in which at least one of the first and second electrodes is an active electrode.

Hereinafter, an example in which the proton conductor in this embodiment is applied to a fuel cell will be described.

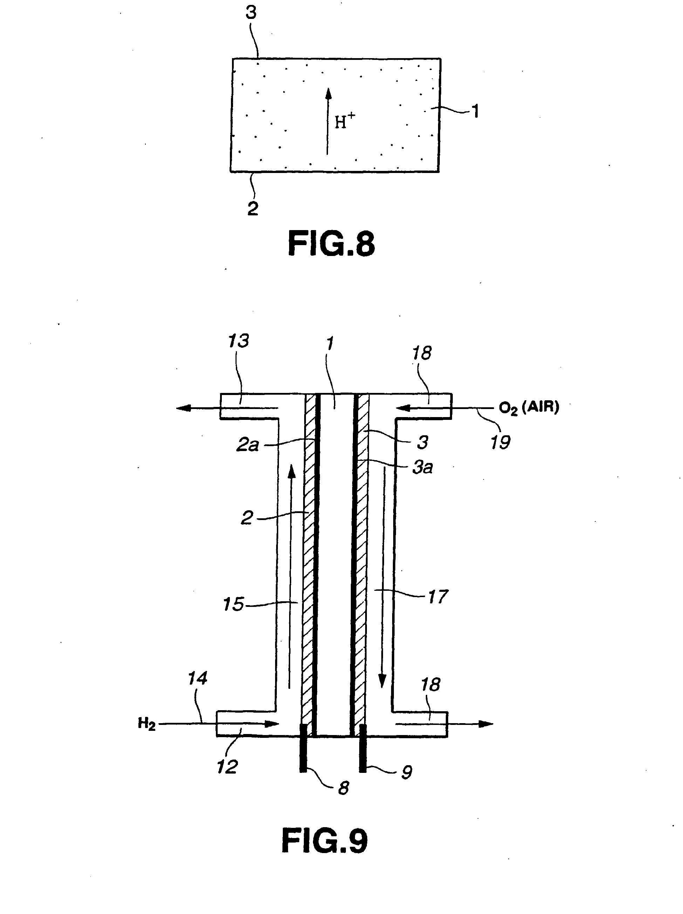

Fig. 8 is a schematic view showing the proton conductance of the fuel cell in which a proton conducting portion 1 is held between a first electrode (for example, hydrogen electrode) 1 and a second electrode (for example, oxygen electrode) 3, wherein protons dissociated or transferred in the proton conducting portion 1 migrate from the first electrode 2 side to the second electrode 3 side along the direction shown by an arrow in Fig. 8.

Fig. 9 is a schematic view showing one example of the fuel cell using the proton conductor in this embodiment. The fuel cell is configured such that a negative electrode (fuel electrode or hydrogen electrode) 2 to or in which a catalyst 2a is closely overlapped or dispersed and which has a terminal 8 faces to a positive electrode (oxygen electrode) 3 to or in which a catalyst 3a is closely overlapped or dispersed and which has a terminal 9, and a proton conducting portion 1 is held therebetween. Upon use of the fuel cell, hydrogen is supplied from an inlet 12 on the negative electrode 2 side, and is discharged from an outlet 13 (which is sometimes not provided) on the negative electrode 2 side. During a period in which fuel (H₂) 14 passes through a flow passage 15, protons are generated. The protons migrate together with protons generated in the proton conducting portion 1, onto the positive electrode 3 side, and react with oxygen (air) 19, which has been supplied in a flow passage 17 from an inlet 16 and flows toward an outlet 18, to generate a desired electromotive force.

According to the fuel cell having the above configuration, since the protons generated in the proton conducting portion 1 migrate, together with the protons supplied from the negative electrode 2 side, onto the positive electrode 3 side, the proton conductivity becomes higher. As a result, it is possible to eliminate the need of any humidifier or other water source or other external migration medium and hence to simplify the configuration of the system and reduce the weight of the system.

Another embodiment of the present invention will be described below. Another embodiment is different from the present embodiment in that the above-described fullerene derivative is used in combination with a polymer material. However, the proton conductor of the second embodiment essentially has the same proton conductivity features of the present embodiment.

A second proton conductor in this embodiment contains the above-described fullerene derivative (into which proton dissociating groups are introduced in carbon atoms constituting fullerene) and a polymer material.

The polymer material may be one kind or two kinds or more known polymers having a film formation ability. The content of the polymer material is generally 50 wt% or less. If the content is more than 50 wt%, the proton conductivity of the fullerene derivative may degrade.

Since the second proton conductor in this embodiment contains the fullerene derivative, it can exhibit a proton conductivity comparable to that of the proton conductor of the present embodiment.

While the proton conductor in the present embodiment containing only the fullerene derivative is used as a compacted powder as described above, the second proton conductor in this embodiment having a film formation ability derived from the polymer material can be used as a flexible proton conductive thin film having a large strength and a gas impermeable property. In general, the thickness of the proton conductive thin film is 300 *µ*m or less.

The kind of polymer material is not particularly limited insofar as it does not obstruct the proton conductivity as much as possible (due to the reaction with the fullerene derivative or the like) and has a film formation ability, but may be generally selected from polymers having no electronic conductivity and exhibiting a good stability. Examples of these polymers may include polyfluorethylene, polyvinylidene fluoride, and polyvinyl alcohol. The reason why polyfluorethylene, polyvinylidene fluoride or polyvinyl alcohol are suitable for the second proton conductor in this embodiment will be described below.

The reason why polyfluorethylene is suitable for the second proton conductor is that it has a good film formation ability. Even by adding polyfluorethylene to the fullerene derivative in an amount smaller than that of another polymer material, it is possible to easily form a thin film of the second proton conductor having a large strength. The content of polyfluorethylene includes 3 wt % or less, preferably, in a range of 0.5 to 1.5 wt%. By adding polyfluorethylene to the fullerene derivative in an amount within the above range, the thin film of the second proton conductor has a thickness that ranges from 1 µm to 100 *µ*m.

The reason why polyvinylidene fluoride or polyvinyl alcohol are suitable for the second proton conductor is that it is effective to form a proton conductive thin film having a good gas permeation preventive ability. The content of these in this case is preferably in the range of 5 to 15 wt%.

If the content of polyvinylidene fluoride or polyvinyl alcohol is less than the lower limit of the above range, there may occur an adverse effect exerted on the film formation.

The thin film of the second proton conductor in this embodiment may be obtained by using a known film formation technique, such as, extrusion molding, filtration, application, etc..

The second proton conductor in this embodiment can be preferably applied to the electrochemical device to which the proton conductor in the present embodiment is applied.

That is to say, in the electrochemical device to which the present embodiment is applied, in which the proton conductor is held between the first and second electrodes, the proton conductor may be replaced with the second proton conductor in this embodiment.

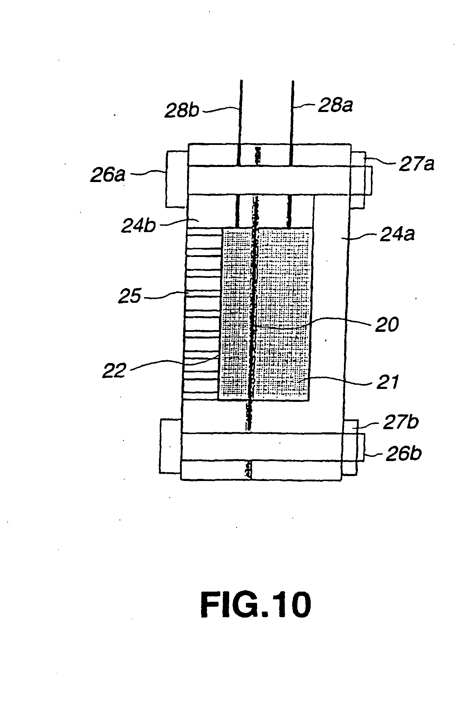

Fig. 10 is a schematic view showing a hydrogen-air cell to which the second proton conductor in this embodiment is applied. In this device, a hydrogen electrode 21 faces to an air electrode 22 with a proton conductor 20 formed into a thin film (configured as the second proton conductor) held therebetween, and the outsides of these electrodes 21 and 22 are held between a Teflon plate 24a and a Teflon plate 24b having a number of holes 25 and fixed thereto by way of bolts 26a and 26b and nuts 27a and 27b, and a hydrogen electrode reed 28a and an air electrode reed 28b extending from the electrodes 21 and 22 are extracted to the outside of the cell.

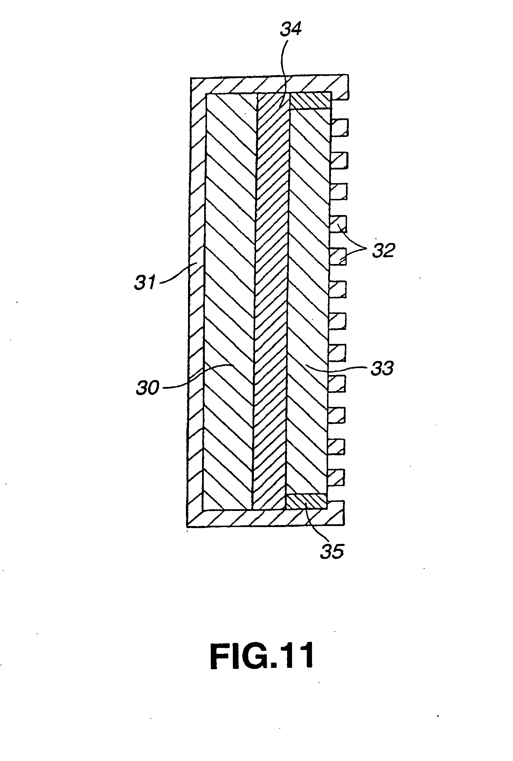

Fig. 11 is a schematic view showing an electrochemical device to which the second proton conductor in this embodiment is applied. Referring to Fig. 11, a proton conductor 34 (configured as the second proton conductor) is held between a negative electrode 31 having on its inner surface a negative electrode active material layer 30 and a positive electrode (gas electrode) 33 having on its outer surface a gas permeation support 32. The negative electrode active material may be configured as a hydrogen absorption alloy or a hydrogen absorption alloy supported by a carbon material such as a fullerene. The gas permeation support 32 may be configured as a porous carbon paper. The positive electrode 33 may be preferably formed by coating a paste of platinum supported by a powder of carbon. Gaps between the outer ends of the negative electrode 31 and the outer ends of the positive electrode 33 are blocked by gaskets 35. In this electrochemical device, charging can be performed by making water be present on the positive electrode 33 side.

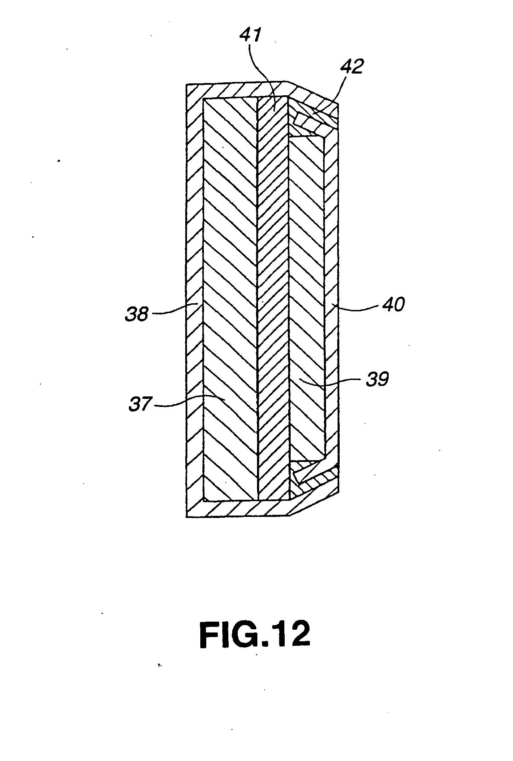

Fig. 12 is a schematic view showing an electrochemical device to which the second proton conductor in this embodiment is applied. Referring to Fig. 12, a proton conductor 41 formed into a thin film (configured as the second proton conductor) is held between a negative electrode 38 having on its inner surface a negative electrode active material layer 37 and a positive electrode 40 having on its inner surface a positive electrode active material layer 39. The positive electrode active material is typically configured as a material essentially comprising nickel hydroxide. Even in this electrochemical device, gaps between the outer ends of the negative electrode 38 and the outer ends of the positive electrode 40 are blocked with gaskets 42.

Each of the above-described electrochemical devices using the second proton conductor in this embodiment can exhibit a good proton conductive effect on the basis of the same mechanism as that of the electromechanical device using the proton conductor in the present embodiment. Further, since the second proton conductor containing the fullerene derivative in combination with the polymer material having a film formation ability, it can be formed into a thin film having a large strength and a small gas permeability, and therefore, it can exhibit a good proton conductivity.

A third embodiment of the present invention will be described below. The third embodiment is different from the first and second embodiments in that the proton conductor essentially comprises a carbon cluster derivative or derivatives, but is the same or similar to the first and second embodiments in other ways, such as, the basic function of the proton conduction mechanism.

A third proton conductor in this embodiment essentially comprises a carbon cluster derivative in which the proton dissociating groups are introduced to a number of carbon atoms of each of the clusters or carbon clusters which are used as a base material for the carbon cluster derivative.

The researches conducted by the present inventor have revealed that, for affording satisfactory proton conductivity to the carbonaceous material, as many proton conduction paths (sites or channels of conduction) as possible need to be provided to the carbonaceous materials. It has been found that satisfactory proton conductivity can be achieved as the entire bulk if a carbon cluster as small in size as possible is used and two or more proton dissociating substituents are introduced on its outer side. In this case, the solid-shaped proton conductor is improved appreciably in acidity. However, in contradistinction from other carbonaceous materials, the carbon cluster is not deteriorated on oxidation and superior in durability, with the constituent atoms of the carbon cluster being bonded tightly to one another, with the result that the interatomic bond is not collapsed, that is chemical changes are less liable to occur, even if the acidity is high, thus enabling the film structure to be maintained.

The third proton conductor in this embodiment having the above configuration can exhibit, even in a dry state, a high proton conductivity similar to that of each of the first and second proton conductors in the first and second embodiments.

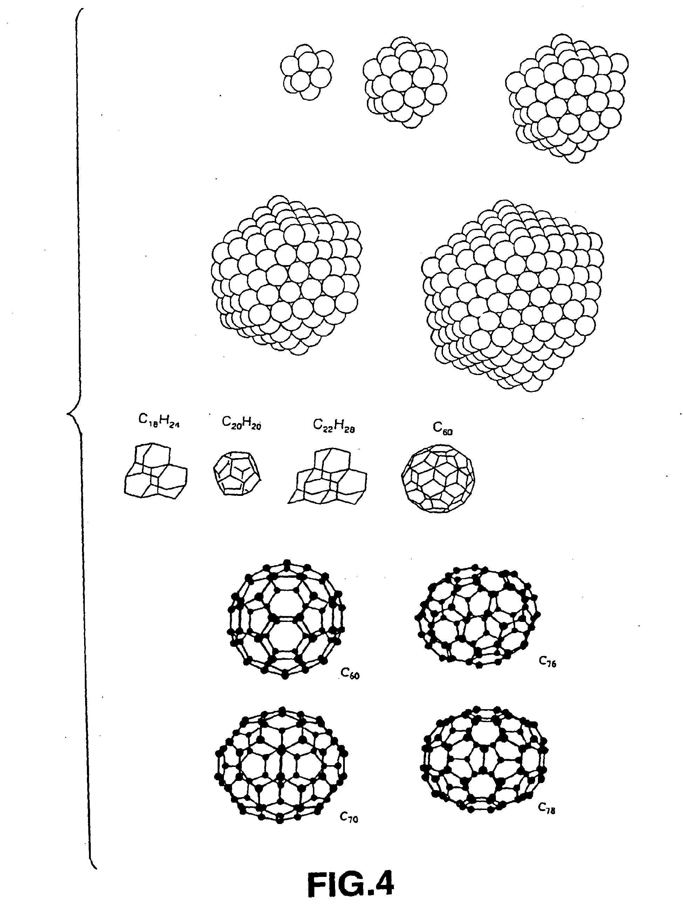

As defined above, the cluster means an aggregate of up to several hundred carbon atoms that are closely bonded together. Due to this aggregated structure, proton conductivity is improved, at the same time as chemical properties are maintained to provide for sufficient film strength and ease with which a layered structure is formed. On the other hand, the cluster mainly composed of carbon means an aggregate of up to several hundred carbon atoms that are closely bonded together irrespective of the carbon to carbon molecular-type bonding that exists between the carbon atoms. It should be noted that the carbon cluster, that is, an aggregate of that substantially contains carbon atoms is not necessarily entirely composed of carbon atoms. In this regard, a collection of atoms, the major part of which is carbon atoms, is herein termed a carbon cluster. Various types of carbon clusters or aggregates of carbon atoms are shown in Fig. 4 to 7. In these figures, the proton dissociating groups, for example, hydroxyl groups, are not shown. From these figures, it is seen that the materials for the proton conductor permit a wide latitude of selection.

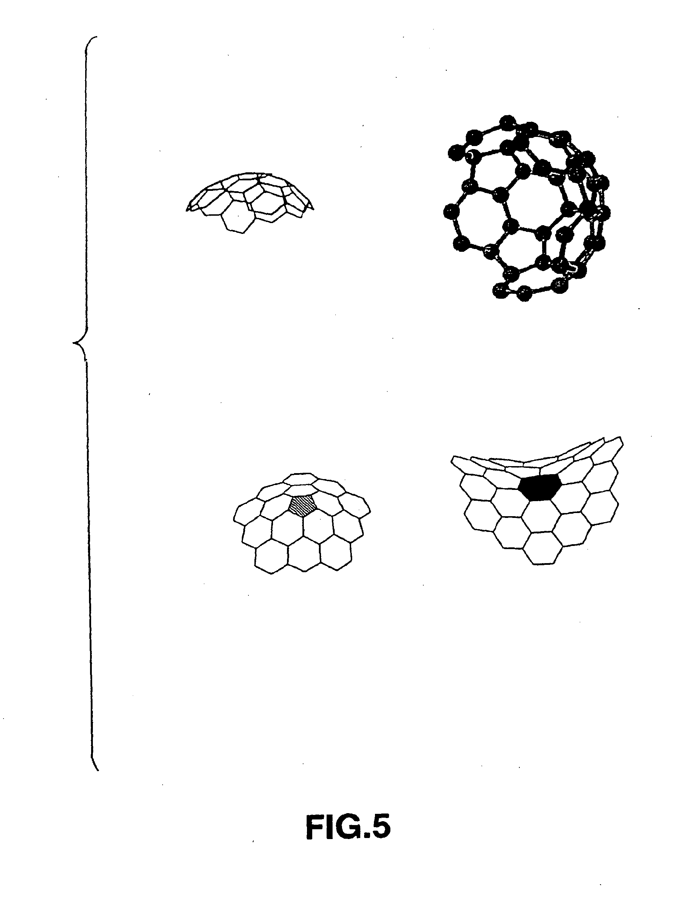

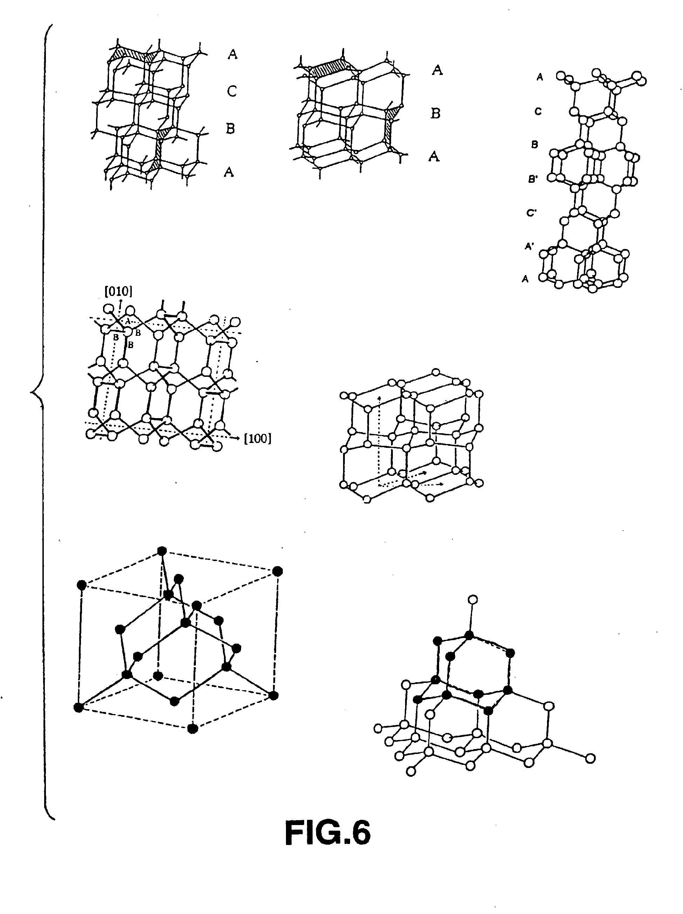

Fig. 4 shows carbon clusters having spherical structures, spheroid structures, and planar structures similar thereto. Fig. 5 shows carbon clusters that have a partially open spherical structure which is characterized by an open end or ends. During production of the fullerene molecules by arc discharge, a large number of carbon clusters having a spherical structure with open ends are generated as sub-products. Fig. 6 shows carbon clusters each having a diamond structure, in which most of the carbon atoms of the carbon cluster are in the SP³ bonding.

A carbon cluster material in which most of the carbon atoms are in the SP² bonding, if it has a planar structure of graphite or has all or part of as fullerene or nano-tube structure, is undesirable as the base of the proton conductor because it has often an electronic conductivity due to the SP² bonding.

On the contrary, a fullerene or nano-tube structure that has the SP² bonding often has no electronic conductivity because it also partially contains an element that exhibits the desirable SP³ bonding, and therefore, it is desirable as the base of a proton conductor.

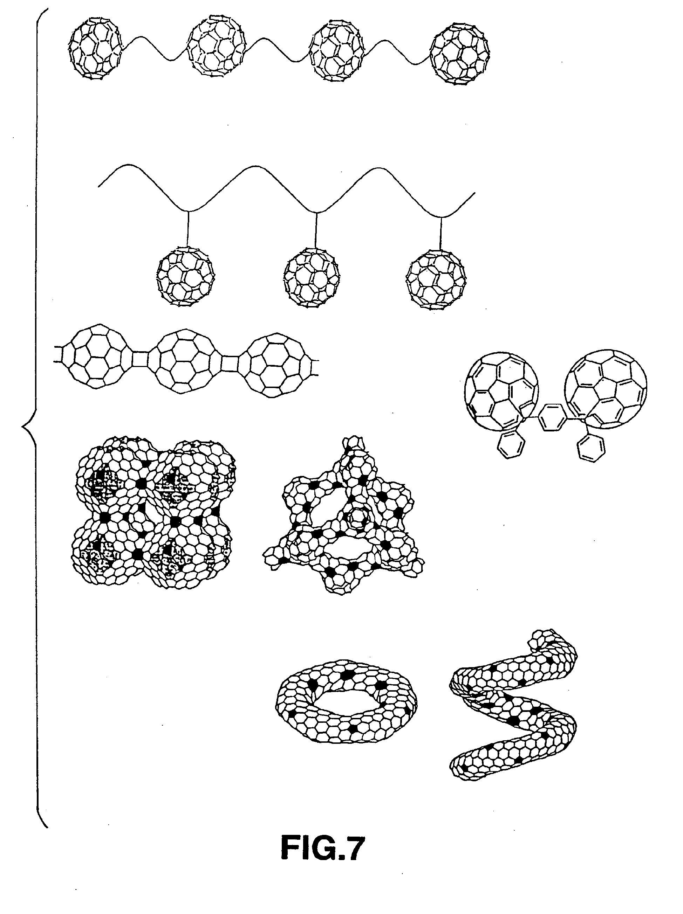

Fig. 7 shows carbon clusters which are bonded to each other. Fig. 7, thus, represents examples of carbon clusters that can be utilized to make the carbon cluster derivative of the proton conductor in an embodiment of the third proton conductor of the present invention.

To form the third proton conductor in this embodiment, it is required to introduce proton dissociating groups to the clusters or carbon clusters. Further, it may be desirable to further introduce electronic attractive groups to each of the clusters or carbon cluster. The proton dissociating groups may be introduced to each carbon cluster in accordance with the following production method.

According to the production method of the present invention, a carbon cluster derivative can be easily obtained by producing carbon clusters composed of carbon powder by arc discharge of a carbon-based electrode, and suitably subjecting the carbon clusters to acid treatment, typically using sulfuric acid and hydrolysis, and also subjected to sulfonation or phosphatation so as to introduce the sulfur and phosphorus-based functional groups, respectively.

The carbon cluster derivative can be compacted into a suitable shape, for example, into a pellet. According to the third proton conductor in this embodiment, the length of the major axis of each of the carbon clusters as the base of the carbon cluster derivatives of the proton conductors may be 100 nm or less, preferably, 100Å or less, and the number of functional groups to be introduced therein may be preferably 2 or more.

The carbon cluster used for the third proton conductor may be of a cage structure at least part of which has open ends. The carbon clusters having such a defect structure has a reactivity similar to that of a fullerene and also has a higher reactivity at its defect portions, that is, its open end portion or portions. Accordingly, the use of carbon clusters each having such a defect structure, that is, open end or ends, as the base of the third proton conductor can promote the introduction of proton dissociating substituents by acid treatment or the like, that is, increase the introduction efficiency of the proton dissociating substituents, thereby enhancing proton conductivity of the third proton conductor. Further, it is possible to synthesize a larger amount of carbon clusters as compared with fullerene molecules, and hence to produce the carbon clusters at a very low cost.

The kinds of functional groups and the electron attractive groups to be introduced to each of the carbon clusters as the base of the third proton conductor in this embodiment may be the same as those described above.

The third proton conductor in this embodiment can be suitably applied to various kinds of electrochemical devices, such as, a fuel cell. In this case, the configuration of the electrochemical device may be basically the same as that of the electromechanical device to which the first or second proton conductor in the first or second embodiment is applied except that the first or second proton conductor is replaced with the third proton conductor. Since the third proton conductor in this embodiment can also exhibit a good proton conductivity even in a dry state, it is possible to eliminate the need of providing any humidifier or other like instrument that produces an external migration, such as, water or steam, and hence to simplify the system configuration and reduce the weight of the system.

A fourth embodiment of the present invention will be described below in which the proton conductor includes a tubular carbonaceous material derivative.

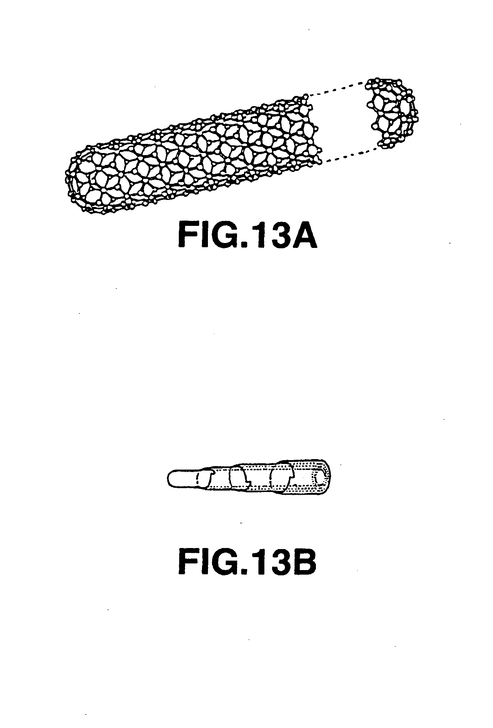

The tubular carbonaceous material derivative includes a tubular carbonaceous material as its base material. The tubular carbonaceous material includes a CNT material that is composed of nano-tube molecules that each have a diameter of about several nanometers or less, typically, in a range of 1 to 2 nanometers. In addition to the CNT material, the tubular carbonaceous material includes a CNF material that is composed of nano-fiber molecules which each have a diameter of several nano-meters or more which may reach up to 1 mm. Further, it is known that the CNT material includes a single-wall carbon nano-tube (SWCNT) material that is composed of nano-tube molecules each being formed by a single layer or a multi-wall carbon nano-tube (MWCNT) that is composed of nano-tube molecules that are each formed of two or more layers which are concentrically overlapped. The configurations of the SWCNT and the MWCNT molecules are respectively shown in Figs. 13A and 13B. In addition, the description of the CNT, the SWCNT and MWCNT materials are illustrative only wherein it is understood that the present invention is not limited to the same.

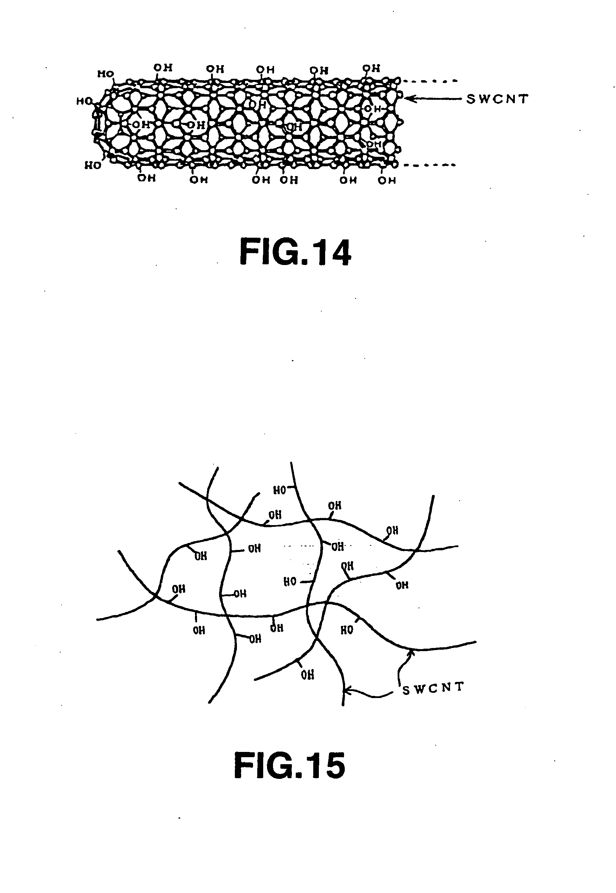

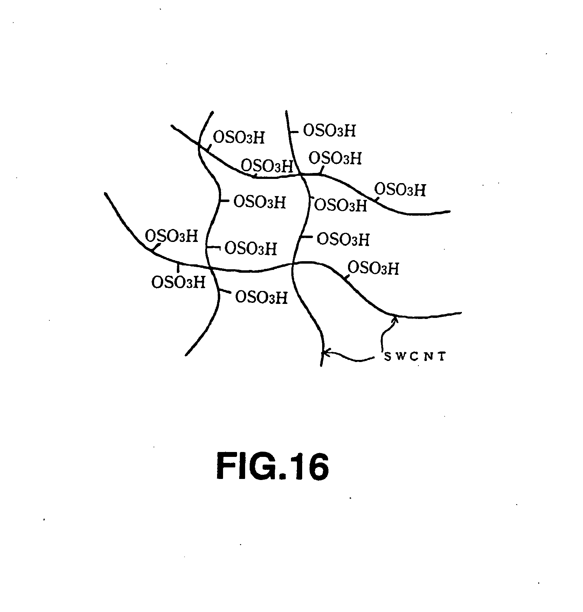

According to the fourth embodiment of the present invention, the proton dissociating groups that are introduced to the tubular carbonaceous materials in order to form the tubular carbonaceous material derivatives include the same proton dissociating groups as previously discussed in regards to the other embodiment of the present invention. As illustrated, Fig. 14 shows an example of a tubular carbonaceous material derivative that contains the hydroxyl functional groups. In addition, Fig. 15 illustrates a number of the tubular carbonaceous molecules or tubular molecules of the tubular carbonaceous material derivative as shown in Fig. 14. As well, Fig. 16 illustrates the tubular molecules of another tubular carbonaceous material derivative that includes the -OSO₃H functional groups.

Such a tubular carbonaceous material derivative is produced by preparing a halogenated tubular carbonaceous material and subjecting the halogenated material to acid treatment by using sulfuric or nitric acid in order to introduce the -OSO₃H functional groups to the tubular carbonaceous material so as to form its derivative.

In addition, a hydrolysis technique may be used to introduce hydroxyl groups instead of the -OSO₃H functional groups. If hydrolysis is used, an acid treatment may follow in order to substitute the hydroxyl groups for different functional groups, such as, the -OSO₃H functional groups. If a non-halogenated tubular carbonaceous material is used as a base or raw material so as to form the tubular carbonaceous material derivative, this material may be subjected to acid treatment by using sulfuric or nitric acid as previously discussed. With regards to the halogenated tubular carbonaceous material, fluorine is preferably used.

The tubular carbonaceous material derivative can be produced not only by the above described wet method but also by the following dry method that utilizes plasma. In this method, a non-halogenated tubular carbonaceous material is subjected to plasma treatment in an oxygen gas and then subjected to further plasma treatment under a hydrogen gas in order to introduce the proton dissociating groups, typically, hydroxyl groups to the tubular molecules of the tubular carbonaceous material.

The foregoing is merely an explanation of a preferred manufacturing method of the carbonaceous tubular material to which the present invention is not limited.

The invention has examined the proton conductivities of these tubular carbonaceous material derivatives and found that these materials provided a high proton conductivity under a varying temperature range that includes the ordinary temperature region, that is, a temperature ranging from less than the freezing point of water to more than the boiling point of water (at least -40°C to 160°C. The present invention has further discovered that the proton conductivity is higher for tubular carbonaceous material derivatives that include the hydrogen sulfate as their groups in place of the hydroxyl groups.

In particular, the polyhydroxylated SWCNT material is a generic name of a derivative that has a structure in which a plurality of hydroxyl groups are added to a number of tubular molecules so as to form the SWCNT material as illustrated in Fig. 14. Of course, with respect to the number, arrangement and the like of the hydroxyl groups, some variations are considered to be within the scope of the present invention. The present invention has newly discovered that an aggregate of polyhydroxylated tubular molecules, namely, a polyhydroxylated SWCNT material, as illustrated in Figs. 14 & 15, in which the hydroxyl groups of the tubular molecules adjacent to each other act on each other to exhibit a high proton conductivity, that is, a high transfer or migration ability of H⁺ or hydrogen protons from the phenolic hydroxy groups that are contained in each of the tubular molecules of the polyhydroxylated SWCNT material or bulk material.

The object of the present invention may also be achieved by a proton conductor mainly composed of an aggregate mass of a derivative of a carbonaceous tubular material having plural -OSO₃H groups, such as an aggregate mass of SWCNT having plural -OSO₃H groups. On the other hand, hydrogen sulfate ester SWCNT, in which OSO₃H groups are substituted for OSO₃H groups, may contain only OSO₃H groups, as shown in Fig.16, or may simultaneously contain plural hydroxy groups and plural OSO₃H groups in one molecule.

The proton conductivity of the tubular carbonaceous material derivative that includes an aggregate of the tubular molecules having a number of functional groups, like the proton conductivity of the other proton conductor embodiments, is not limited by the environmental surroundings. In this way, an additional source of protons from migrating mediums, such as, water is not necessary in order to realize the desirable effects of the present invention.

Similar to the other embodiments, the reason why the tubular carbonaceous material derivative can exhibit such a desirable proton conductivity effect is that a large amount of the functional groups can be introduced to a number of the tubular molecules of the tubular carbonaceous material so that the proton density which corresponds to the conductivity per unit volume of the conductor is very large in size.

In addition, the tubular carbonaceous material derivative is mostly composed of carbon atoms of each of the tubular molecules and therefore is light in weight and does not decompose as readily nor contain any contaminants. Moreover, the tubular carbonaceous material that is used for a base material for producing the derivative thereof can be produced by catalytic thermal decomposition of hydrocarbons at a low cost. As a result, the tubular carbonaceous material is regarded as a material that is desirable for reasons of resource, environment and economy. (Carbon Vol. 36, No. 11, pp. 1603-1612, 1998).

According to the study of the present inventor on the proton dissociating groups, the proton dissociating groups are not limited to the hydroxyl or -OSO₃H functional groups as long as they present preferable proton conductivity.

To be more specific, the proton dissociating groups can be expressed by a chemical formula of -XH where X is an arbitrary atom or atomic group having a bivalent bond, and further the group can be expressed by a chemical formula of -OH or -YOH where Y is an arbitrary atom or atomic group having a bivalent bond. In particular, the proton dissociating groups are preferably at least one of the -OH and -OSO₃H, and -COOH, -SO₃H and -OPO(OH) ₃ functional groups.

Also, the proton dissociating groups to be introduced into these derivatives are arranged in a similar manner as in the aforementioned examples.

According to this embodiment, electron attractive groups, such as, nitro groups, carbonyl groups and carboxyl groups, nitrile groups, alkyl halide groups or halogen atoms (fluorine or chlorine atoms) may be preferably introduced together with the proton dissociating groups, to carbon atoms of the tubular carbonaceous material. For example, the -NO₂, -CN, -F, -Cl,-COOR, -CHO, -COR, -CF₃, or -SO₃CF₃ (R is an alkyl group) electron attractive groups can be introduced to SWCNT, as well as the proton dissociating groups such as OH groups. With the presence of the electron attractive groups in addition to the functional groups, it is easy for protons to be released from the proton dissociating groups and be transferred between the proton dissociating groups by the electron attractive effect of the electron attractive groups.

With respect to the number of proton dissociating groups of the tubular carbonaceous material derivative, the number is limited to the extent that it is less than the number of carbon atoms of the tubular carbonaceous material derivative.

In addition, the number of functional groups may be limited to the extent that is necessary to cancel the electronic conductivity. For example, this number is preferably one or more per ten carbon atoms for a SWCNT material.

The proton conductor of the present embodiment is mainly composed of the above-mentioned carbonaceous tubular material and may contain other ingredients which are not obstructive to or raise the proton conductivity. Most preferred among these other ingredients is the fullerene derivative having introduced therein the aforementioned proton dissociating groups.

Among the merits of the carbonaceous tubular materials, there are a marked length of the axial direction of the tube than its axial length and intricate entanglement of respective structures, as discussed above. Due to these advantages, a stronger and more stable films can be formed, when applying to the electro-chemical device, than if fullerene derivatives as spherical molecules are aggregated together. However, since the reaction of introducing proton dissociating groups can occur more readily in case of fullerene, and higher conductivity can then be produced, it is felt to be more desirable to use these two materials selectively depending on particular applications.

If, in order to produce a compound material composed of two different materials, a carbonaceous tubular material, into which proton dissociating groups have been introduced, and fullerene derivatives, into which proton dissociating groups have been introduced, are used in combination, a further excellent function can be achieved.

According to the present invention, tubular carbonaceous material derivatives may be desirably formed as a film to be used for an electrochemical device such as a fuel cell.

These materials can be formed as a film by a known extrusion molding technique and more preferably by dispersing the tubular carbonaceous material derivative in a liquid and filtering the dispersion. A solvent such as water is generally used as the liquid. However, the liquid is not particularly limited insofar as the derivative can be dispersed in the liquid.

By filtering the dispersion, the tubular carbonaceous material derivative is deposited in a film shape on the filter. The film does not contain any binder and is composed of only the tubular carbonaceous material derivative wherein the tubular molecules are entangled in complicated form. Such a film has a very high strength and can be easily peeled from the filter.

In this case, if the fullerene derivative is dispersed in combination with the tubular carbonaceous material derivative in the liquid, it is possible to easily form a composite film which is composed of a combination of these materials which again does not contain any binder.

The proton conductor of this embodiment is preferably used for a fuel cell. As in the previous embodiment, the structure of the fuel cell is as shown in Fig.9.

The present invention will be hereinafter described in detail based on the embodiments.

### <Synthesis of Polyhydroxylated Fullerene of Example 1>

The synthesis of polyhydroxylated fullerene was performed with reference to L. Y. Chaing, L. Y. Wang, J. W. Swircczewski, S. Soled and S. Cameron, J. Org. Chem. 59, 3960 (1994). First, 2g of a powder of a mixture of C₆₀ and C₇₀ containing about 15% of C₇₀ was put in 30 ml of fuming sulfuric acid, and was stirred for three days while being kept in a nitrogen atmosphere at 60°C. The reactant was put little by little in diethyl ether anhydride cooled in an ice bath, and the deposit was fractionated by centrifugal separation, cleansed twice by diethyl ether and twice by a mixture of diethyl ether and acetonitrile at a mixing ratio of 2 : 1, and dried under a reduced pressure at 40°C. The deposit thus cleaned and dried was put into 60 ml of ion exchange water, and stirred for 10 hours at 85°C while being subjected to bubbling using nitrogen. The reactant was subjected to centrifugal separation, to separate a deposit, and the deposit was cleaned several times by pure water, repeatedly subjected to centrifugal separation, and dried under a reduced pressure at 40°C. A brown powder thus obtained was subjected to FT-IR measurement. As a result, the IR spectrum of the brown powder nearly conformed to that of C₆₀ (OH)₁₂ shown in the above document, and therefore, it was confirmed that the powder was the polyhydroxylated fullerene as the target material. The above-described reaction is represented, for example, concerning C₆₀ as follows:

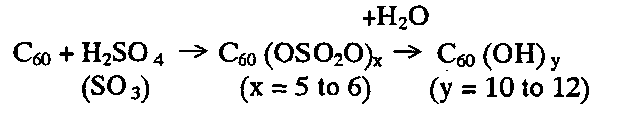

### <Production of Pellet of Aggregate of Polyhydroxylated Fullerene of Example 1 >

Next, 90 mg of the powder of the polyhydroxylated fullerene was pressed in one direction at a pressure of about 5 tons/cm² into a circular pellet having a diameter of 15 mm. Since the compactivity of the powder of polyhydroxylated fullerene was excellent although the powder contained no binder resin, the powder of the polyhydroxylated fullerene could be easily formed into a pellet having a thickness of about 300 µm. Such a pellet is taken as a pellet in Inventive Example 1.

### <Synthesis of Hydrogensulfate-Esterificated Polyfullerene Hydride (all esterification) of Example 2>

The synthesis of a hydrogen sulfated fullerene was performed with reference to the above-described document. First. 1g of a powder of a polyhydroxylated fullerene was put in 60 ml of fuming sulfuric acid, and was stirred for three days while being kept in a nitrogen atmosphere at ordinary temperature. The reactant was put little by little in diethyl ether anhydride, cooled in an ice bath, and the deposit was fractionated by centrifugal separation, cleansed three-times by diethyl ether and twice by a mixture of diethyl ether and acetonitrile at a mixing ration of 2 : 1, and dried under a reduced pressure at 40°C.

A powder thus obtained was subjected to FT-IR measurement. As a result, the IR spectrum of the powder nearly conformed to that of a hydrogen sulfated fullerene in which the hydroxyl groups were entirely replaced with hydrogen sulfated groups, i.e. -OSO₃H groups, shown in the document, and therefore, it confirmed that the powder was the hydrogen sulfated fullerene as the target material.

The above-described reaction is represented, for example, concerning C₆₀ (OH)y as follows (here and hereinafter):

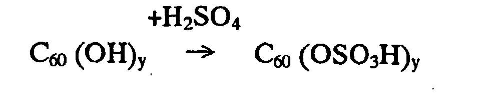

### <Production of Pellet of Aggregate of Hydrogensulfate-Esterificated Polyfullerene Hydride of Example 2>

Next, 70 mg of the powder of hydrogen sulfated fullerene was pressed in one direction at a pressure of about 5 tons/cm² into a circular pellet having a diameter of 15 mm. Since the compactivity of the powder of hydrogen sulfated fullerene was excellent although the powder contained no binder resin, the powder of hydrogen sulfated fullerene could be easily formed into a pellet having a thickness of about 300 µm. Such a pellet is taken as a pellet in Inventive Example 2.

### <Synthesis of Partially Hydrogensulfate-Esterificated Polyfullerene Hydride (partial esterification)>

First, 2g of powder of a mixture of C₆₀ and C₇₀ containing about 15% of C₇₀ was put in 30 ml of fuming sulfuric acid, and was stirred for three days while being kept in a nitrogen atmosphere at 60°C. The reactant was put little by little in diethyl ether cooled in an ice bath. It should be noted that diethyl ether not subjected to dehydration is used. The deposit thus obtained was fractionated by centrifugal separation, cleaned three times by diethyl ether and twice by a mixture of diethyl ether and acetonitrile at a mixing ratio of 2:1, and dried under a reduced pressure at 40°C. A powder thus obtained was subjected to FT-IR measurement. As a result, the IR spectrum of the powder nearly conformed to that of a fullerene derivative containing both of the hydroxyl and OSO₃H groups shown in the document, and therefore, it was confirmed that the powder was the polyhydroxyl hydrogen sulfated fullerene as the target material. The above-described reactions are represented, for example, concerning C₆₀ as follows (here and hereinafter):

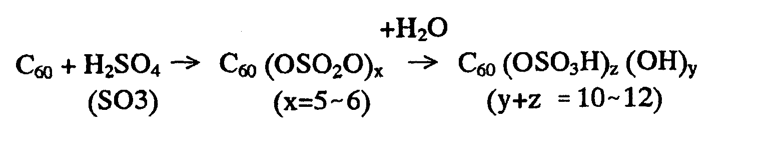

### <Production Pellet of Aggregate of Hydrogensulfate-Esterificated Polyfullerene Hydride of Example 3>

Next, 80 mg of the powder of a polyhydroxyl hydrogen sulfated fullerene was pressed in one direction at a pressure of about 5 tons/cm² into a circular pellet having a diameter of 15 mm. Since the compactivity of the powder of polyhydroxyl hydrogen sulfated fullerene was excellent although the powder contained no binder resin, the powder of the polyhydroxyl hydrogen sulfated fullerene could be easily formed into a pellet having a thickness of about 300 µm. Such a pellet is taken as a pellet in Inventive Example 3.

### <Production of Pellet of Aggregate of Fullerene of Comparative Example 1>

For comparison, 90 mg of a powder of the fullerene molecules used as a the raw material for synthesis in the above examples was pressed in one direction at a pressure of about 5 tons/cm² into a circular pellet having a diameter of 16 mm. Since the compactivity of the powder of the fullerene molecules was relatively excellent although the powder contained no binder resin, the powder of the fullerene molecules could be relatively easily formed into a pellet having a thickness of about 300Pm. Such a pellet is taken as a pellet in Comparative Example 1.

### Measurement of Proton Conductivities of Pellets of Inventive Examples 1 to 3 and Comparative Example 1

To measure a proton conductivity of each of the pellets of Inventive Example 1-3 and Comparative Example 1, both sides of the pellet were held between aluminum plates each having the same diameter as that of the pellet, that is, 15 mm, and AC voltages (amplitude: 0.1 V) at frequencies ranging from 7 MHz to 0.01 Hz are applied to the pellet, to measure a complex impedance at each frequency. The measurement was performed under a dry atmosphere.

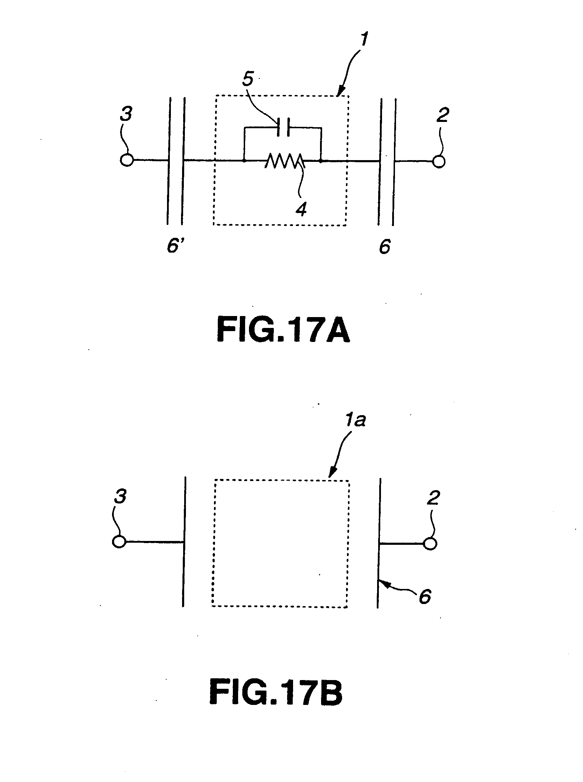

With respect to the above impedance measurement, a proton conducting portion 1 of a proton conductor composed of the above pellet electrically constitutes an equivalent circuit shown in Fig. 17A, in which capacitances 6 and 6' are formed between first and second electrodes 2 and 3 with the proton conducting portion 1 expressed by a parallel circuit of a resistance 4 and a capacitance 5 held therebetween. In addition, the capacitance 5 designates a delay effect (phase delay at a high frequency) upon migration of protons, and the resistance 4 designates a parameter of difficulty of migration of protons.

The measured impedance Z is expressed by an equation Z = Re (Z) + i • Im (Z). The frequency dependency on the proton conducting portion expressed by the above equivalent circuit was examined.

In addition, Fig. 17B shows an equivalent circuit of a proton conductor (Comparative Example 1 described above) using the typical fullerene molecules without functional groups.

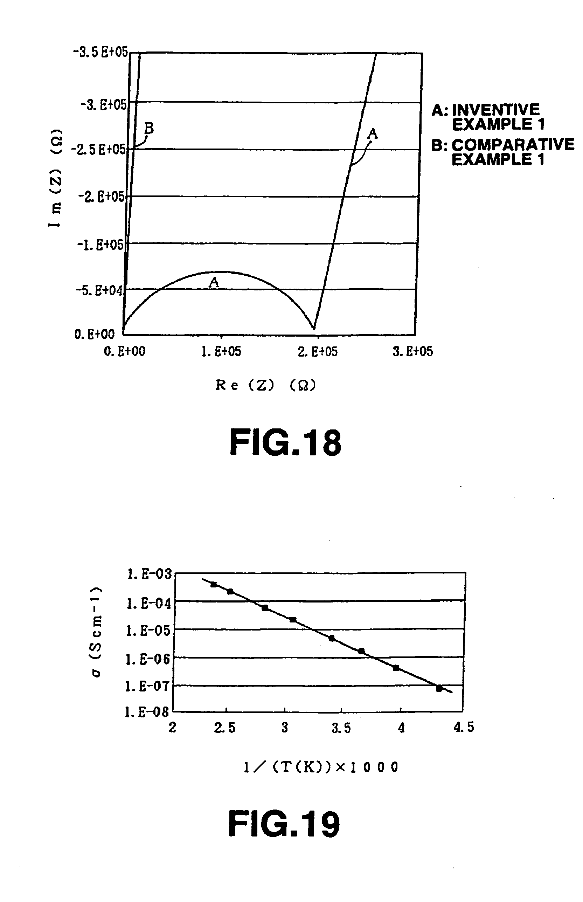

Fig. 18 shows results of measuring the impedances of the pellets of Inventive Example 1 and Comparative Example 1.

Referring to Fig. 18, for Comparative Example 1, the frequency characteristics of the complex impedance is nearly the same as the behavior of a single capacitor, and the conductance of charged particles (electrons, ions and the like) of the aggregate of the fullerene molecules is not observed at all; while, for Inventive example 1, the impedance in a high frequency region depicts a flattened but very smooth single semi-circular arc, which shows the conductance of some charged particles in the pellet, and the imaginary number portion of the impedance is rapidly raised in a low frequency region, which shows the occurrence of blocking of charged particles between the aluminum electrode and the pellet as gradually nearing the DC voltage. With respect to the blocking of the charged particles between the aluminum electrode and the pellet in Inventive Example 1, the charged particles on the aluminum electrode side are electrons, and accordingly, it is apparent that the charged particles in the pellets are not electrons or holes but ions, more specifically, protons in consideration of the configuration of the fullerene derivative.

The conductivity of the above-described charged particles can be calculated on the basis of an intercept of the circular-arc on the high frequency side with the X-axis. For the pellet of Inventive Example 1, the conductivity of the charged particles becomes about 5. 10⁻⁶ S/cm. The pellets of Inventive Examples 2 and 3 were subjected to the same measurement as described above. As a result, the whole shape in each of the frequency characteristic of the impedance in each of the Inventive Examples 2 and 3 is similar to that in Inventive Example 1; however, as shown in Table 1, the conductivity of charged particles in each of Inventive examples 2 and 3, obtained on the basis of an intercept of a circular-arc portion with the X-axis, is different than in Inventive Example 1.

**Table 1 Conductivities of Pellets of Proton Conductors in Inventive Examples 1, 2 and 3 (at 25°C)**

| Kind of Pellets | Conductivity (S/cm) |
|---|---|
| Inventive Example 1 | 5X10⁻⁶ |
| Inventive Example 2 | 9X10⁻⁴ |
| Inventive Example 3 | 2X10⁻⁵ |

As shown in Table 1, the conductivity of the pellet of the fullerene derivative containing the -OSO₃H groups cause ionization of hydrogen easier than the hydroxyl groups. The results of Table 1 also show that the aggregate of the fullerene derivative containing the hydroxyl groups and OSO₃H groups can exhibit, in a dry atmosphere, a good proton conductivity at ordinary temperature.

Next, the complex impedance of the pellet produced in Inventive Example 1 was measured in a temperature range from 160°C to -40°C, and the conductivity of the pellet was calculated on the basis of a circular-arc portion on the high frequency side of the complex impedance curve of the pellet measured at each temperature to examine the temperature dependency on the conductivity. As the results shown in Fig. 19 (the Arrhenius plot), it is apparent that the conductivity changed in a straight-line or linear fashion with respect to a change in temperature within the measured temperature range of 160°C to -40°C. In other words, data of Fig. 19 shows that a single ion conduction mechanism can occur at least within the temperature range of 160°C to -40°C. The proton conductor essentially comprising the fullerene derivative according to the present invention, therefore, can exhibit a good proton conductivity in a wide temperature range from -40°C to 120°C that includes ordinary temperatures.

### Forming a Film Including Polyhydroxylated Fullerene of Example 1 and Generating Electricity Experiment Using the Film

0.5 g of the powder of the polyhydroxylated fullerene of Example 1 among Examples 1 to 3 was mixed with 1g of tetrahydrofurane (THF); and the mixture was ultrasonic-vibrated for 10 minutes, resulting in the complete dissolution of the polyhydroxylated fullerene in THF. After fabricating a carbon electrode, a film of the polyhydroxylated fullerene was formed by the steps of: masking the surface of the electrode by a plastic mask having a rectangular opening, dripping the above-described solution in the opening, spreading the solution in the opening, drying in a room temperature in order to vaporize THF, and removing the mask. The same amount of electrode described above, with its downward surface having a catalyst, was laid on the film. The upper electrode was pressed by about 5 tons/cm² to complete a composite. This composite was incorporated in a fuel cell as shown in Fig. 9. A generating electricity experiment was performed by supplying hydrogen gas to one electrode and air to another electrode in the fuel cell.

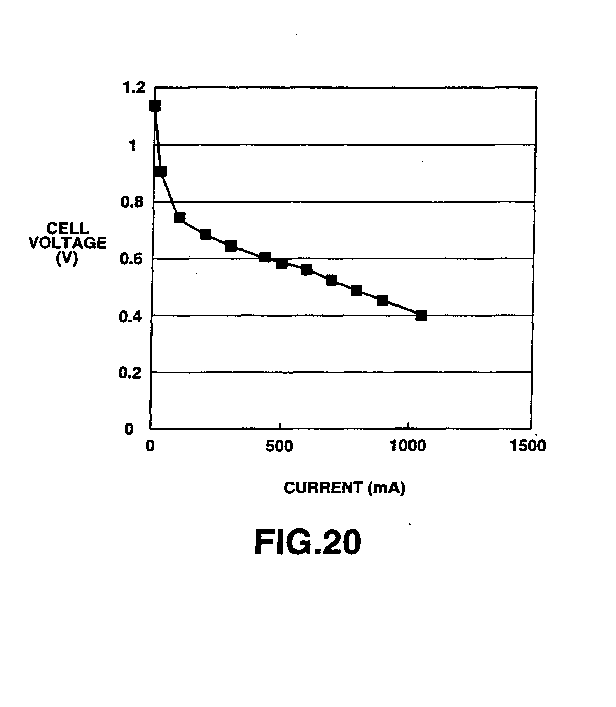

The experimental result is shown in Fig. 20. The open circuit voltage was about 1.2V, and the characteristic of the closed circuit voltage was also excellent against the current value for the fuel cell.

### <Production of Pellet of Polyhydroxylated Fullerene 4A of Example 4>

First, 70 mg of the powder of the fullerene derivative obtained by the above-described synthesis was mixed with 10 mg of a powder of polyvinylidene fluoride, followed by addition of 0.5 ml of dimethylformamide thereto, and the powders thus mixed were stirred in the solvent. The mixture was poured in a circular mold having a diameter of 15 mm, and the solvent was evaporated under a reduced pressure. The mixture from which the solvent was evaporated was then pressed into a pellet having a diameter of 15 mm and a diameter of about 300 µm. Such a pellet is taken as a pellet 4A of Inventive Example 4.

### <Production of Pellet of Polyhydroxylated Fullerene 4B of Example 4>

Similarly, 70 mg of the powder of the fullerene derivative was mixed with a dispersion containing 60% of a fine powder of polytetrafluoroethylene (PTFE) in such a manner that the content of PTFE became 1 wt% on the basis of the total amount, and kneaded. The mixture thus kneaded was molded into a pellet having a diameter of 15 mm and a thickness of about 300µm. Such a pellet is taken as a pellet 4B of Inventive Example 4.

### <Synthesis of Hydrogensulfate-Esterificated Polyfullerene Hydride (all estrification) of Example 5>

The synthesis of a hydrogen sulfated fullerene was performed with reference to the above-described document. First, 1 g of the powder of a polyhydroxylated fullerene was put in 60 ml of fuming sulfuric acid, and was stirred for three days while kept in a nitrogen atmosphere at ordinary temperature. The reactant was put little by little in diethyl ether anhydride cooled in an ice bath, and the deposit was fractionated by centrifugal separation, cleaned three times by diethyl ether and twice by a mixture of diethyl ether and acetonitrile at a mixing ratio of 2 : 1, and dried under a reduced pressure at 40°C. A powder thus obtained was subjected to FT-IR measurement. As a result, the IR spectrum of the powder nearly conformed to that of a fullerene derivative in which the hydroxyl groups were all hydrogen sulfate groups shown in the document, and therefore, it was confirmed that the powder was the hydrogen sulfated fullerene as the target material.

### <Production of Pellet 5A of Hydrogensulfate-Esterificated Polyfullerene Hydride (all estrification) of Example 5>

First, 70 mg of the powder of the hydrogen sulfated fullerene derivative was mixed with 10 mg of a powder of polyvinylidene fluoride, followed by addition of 0.5 ml of dimethylformamide thereto, and the powders thus mixed were stirred in the solvent. The mixture was poured in a circular mold having a diameter of 15 mm, and the solvent was evaporated under a reduced pressure. The mixture from which the solvent was evaporated was then pressed into a pellet having a diameter of 15 mm and a thickness of about 300 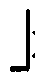 m. Such a pellet is taken as a pellet of 5A of Inventive Example 5.

### <Production of Pellet 5B of Hydrogensulfate-Esterificated Polyfullerene Hydride (all estrification) of Example 5>

Similarly, 70 mg of the powder of the hydrogen sulfated fullerene was mixed with a dispersion containing 60% of a fine powder of polytetrafluoroethylene (PTFE) in such a manner that the content of PTFE became 1 wt% on the basis of the total amount, and kneaded. The mixture thus kneaded was molded into a pellet having a diameter of 15 mm and a thickness of about 300 µm. Such a pellet is taken as a pellet of 5B of Inventive Example 5.

### <Synthesis of Hydrogensulfate-Esterificated Polyfullerene Hydride (partial estrification) of Example 6>

First, 2g of a powder of a mixture of C₆₀ and C₇₀ containing about 15% of C₇₀ was put in 30 ml of fuming sulfuric acid, and was stirred for three days while being kept in a nitrogen atmosphere at 60°C. The reactant was put little by little in diethyl ether cooled in an ice bath. It should be noted that diethyl ether not subjected to dehydration is used. The deposit thus obtained was fractionated by centrifugal separation, cleaned three times by diethyl ether and twice by a mixture of diethyl ether and acetonitrile at a mixing ratio of 2 : 1, and dried under a reduced pressure at 40°C. A powder thus obtained was subjected to FT-IR measurement. As a result, the IR spectrum of the powder nearly conformed to that of a fullerene derivative containing the hydroxyl groups and OSO₃H groups shown in the document, and therefore, it was confirmed that the powder was the polyhydroxyl hydrogen sulfated fullerene as the target material.

### <Production of Pellet 6A of Hydrogensulfate-Esterificated Polyfullerene Hydride (partial estrification) of Example 6>

First, 70 mg of a powder of the polyhydroxyl hydrogen sulfated fullerene derivative was mixed with 10 mg of a powder of polyvinylidene fluoride, followed by addition of 0.5 ml of dimethylformamide thereto, and the powders thus mixed were stirred in the solvent. The mixture was poured in a circular mold having a diameter of 15 mm, and the solvent was evaporated under a reduced pressure. The mixture from which the solvent was evaporated was then pressed into a pellet having a diameter of 15 mm and a thickness of about 300 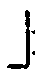 m. Such a pellet is taken as a pellet of 6A of Inventive Example 6.

### <Production of Pellet 6B of Hydrogensulfate-Esterificated Polyfullerene Hydride (partial estrification) of Example 6>

Similarly, 70 mg of the powder of the polyhydroxylated hydrogen sulfated fullerene was mixed with a dispersion containing 60% of a fine powder of polytetrafluoroethylene (PTFE) in such a manner that the content of PTFE became 1 wt% on the basis of the total amount, and kneaded. The mixture thus kneaded was molded into a pellet having a diameter of 15 mm and a thickness of about 300 µm. Such a pellet is taken as a pellet of 6B of Inventive Example 6.

### <Production of Pellet of Fullerene of Comparative Example 2>

For comparison, 90 mg of a powder of the fullerene molecules used as the raw material for the synthesis in the above examples was mixed with 10 mg of a powder of polyvinylidene fluoride, followed by addition of 0.5 ml of dimethylformamide thereto, and the powders thus mixed were stirred in the solvent.

The mixture was poured in a circular mold having a diameter of 15 mm, and the solvent was evaporated under a reduced pressure. The mixture from which the solvent was evaporated was then pressed into a pellet having a diameter of 15 mm and a thickness of about 300 µm. Such a pellet is taken as a pellet of Comparative Example 2.

### <Production of Pellet of Fullerene of Comparative Example 3>

For comparison, 70 mg of the powder of the fullerene molecules used as the raw material for synthesis in the above examples was mixed with a dispersion containing 60% of a fine powder of polytetrafluoroethylene (PTFE) in such a manner that the content of PTFE became 1 wt% on the basis of the total amount, and kneaded. The mixture thus kneaded was molded into a pellet having a diameter of 15 mm and a thickness of about 300 µm. Such a pellet is taken as a pellet of Comparative Example 3.

### Measurement of Proton Conductivities of Pellets of Inventive Examples 4 to 6 and Comparative Example 2

To measure a proton conductivity of each of the pellets of Inventive Example 4 - 6 and Comparative Example 2, both sides of the pellet were held between aluminum plates each having the same diameter as that of the pellet, that is, 15 mm, and AC voltages (amplitude: 0.1 V) at frequencies ranging from 7 MHz to 0.01 Hz are applied to the pellet, to measure a complex impedance at each frequency. The measurement was performed under a dry atmosphere.

With respect to the above impedance measurement, a proton conducting portion 1 of a proton conductor composed of the above pellet electrically constitutes an equivalent circuit shown in Fig. 17A, in which capacitances 6 and 6' are formed between first and second electrodes 2 and 3 with the proton conducting portion 1 expressed by a parallel circuit of a resistance 4 and a capacitance 5 held therebetween. In addition, the capacitance 5 designates a delay effect (phase delay at a high frequency) upon migration of protons, and the resistance 4 designates a parameter of difficulty of migration of protons. The measured impedance Z is expressed by an equation of Z = Re (Z) + i • Im (Z). The frequency dependency on the proton conducting portion expressed by the above equivalent circuit was examined. In addition, Fig. 17B shows an equivalent circuit of a proton conductor (Comparative Example to be described later) using the typical fullerene molecules that contain no dissociation of proton.

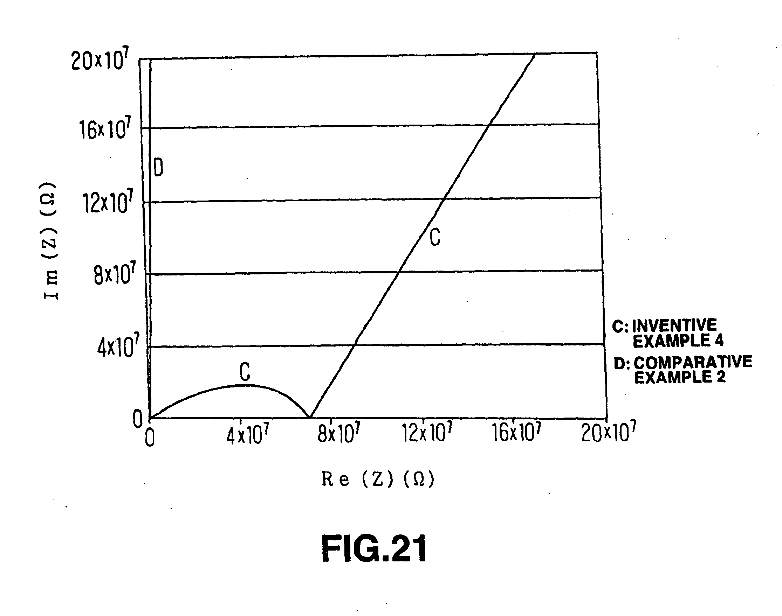

Fig. 21 shows results of measuring the impedances of the pellet 1A of Inventive Example 4 and the pellet of Comparative Example 2.

Referring to Fig. 21, for the pellet of Comparative Example 2, the frequency characteristics of the complex impedance is nearly the same as the behavior of a single capacitor, and the conductance of charged particles (electrons, ions and the like) of the aggregate of the fullerene molecules is not observed at all; while, for the pellet of Inventive Example 4, the impedance in a high frequency region depicts a flattened but very smooth single semi-circular arc, which shows the conductance of some charged particles in the pellet, and the imaginary number portion of the impedance is rapidly raised in a low frequency region, which shows the occurrence of blocking of charged particles between the aluminum electrode and the pellet as gradually nearing the DC voltage. With respect to the blocking of the charged particles between the aluminum electrode and the pellet 1A of Inventive Example 4, the charged particles on the aluminum electrode side are electrons, and accordingly, it is apparent that the charged particles in the pellets are not electrons or holes but ions, more specifically, protons in consideration of the configuration of the fullerene derivative.

The conductivity of the above-described charged particles can be calculated on the basis of an intercept of the circular-arc on the high frequency side with the X-axis. For the pellet of Inventive Example 4, the conductivity of the charged particles become about 1X10⁻⁶ S/cm. The pellets of 1B of Inventive Example 4, the pellets of Inventive Example 5, and the pellets of Inventive Example 6 were subjected to the same measurement as described above. As a result, the whole shape of the frequency characteristics of the impedance in each of the pellets is similar to that of Inventive Example 4; however, as shown in Table 2, the conductivity of charged particles in each of the pellets obtained on the basis of an intercept of a circular-are portion with the X-axis, is different from that in the pellet.

**Table 2 Conductivities of Pellets of Proton Conductors in Inventive Examples (at 25°C)**

| Kind of Pellets | Conductivity (S/cm) |
|---|---|
| Pellet 4A of Inventive Example 4 | 1 × 10⁻⁶ |
| Pellet 5A of Inventive Example 5 | 2 × 10⁻⁴ |
| Pellet 6A of Inventive Example 6 | 6 × 10⁻⁵ |
| Pellet 4B of Inventive Example 4 | 3 × 10⁻⁶ |
| Pellet 5B of Inventive Example 5 | 7 × 10⁻⁴ |
| Pellet 6B of Inventive Example 6 | 3 × 10⁻⁶ |

As shown in Table 2, in both of the pellet types A and B of the Inventive Examples 4, 5, and 6, the conductivity of the pellet of the fullerene derivative containing the OSO₃H groups is larger than that of the pellet of the fullerene derivative containing the hydroxyl groups. The reason for this is that the OSO₃H groups cause ionization of hydrogen more easily than the hydroxyl groups. The results of Table 2 also show that the aggregate of the fullerene derivative containing the hydroxyl groups and OSO₃H groups can exhibit, in a dry atmosphere, a good proton conductivity at ordinary temperature.

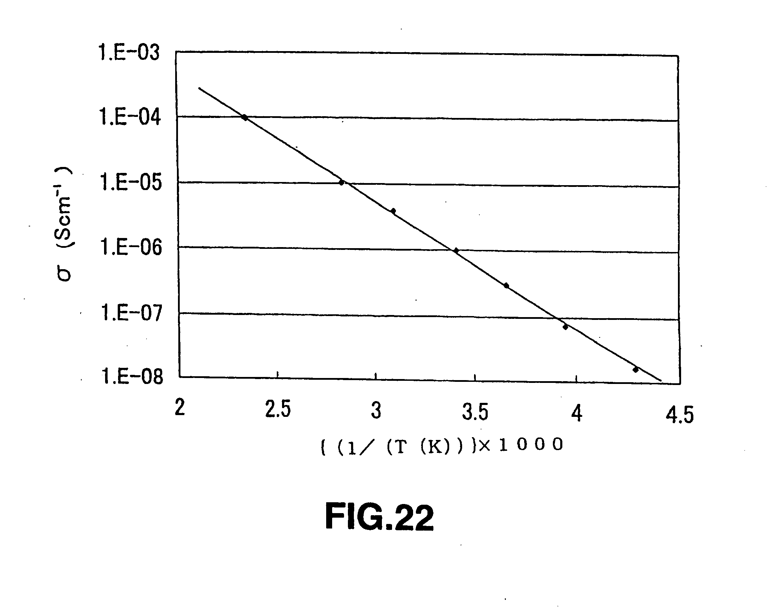

Next, the complex impedance of the pellet 4A of Inventive Example 4 was measured in a temperature range from 160°C to -40°C, and the conductivity of the pellet was calculated on the basis of a circular-arc portion on the high frequency side of the complex impedance curve of the pellet measured at each temperature to examine the temperature dependency on the conductivity. The results are shown in Fig. 22 as the Arrhenius plot. From the data shown in Fig. 22, it is apparent that the conductivity and temperature exist in a linear relationship at least within the temperature range of 160°C to -40°C. In other words, data of Fig. 22 shows that a single ion conduction mechanism can proceed in the temperature range of 160°C to -40°C. The second proton conductor essentially comprising the fullerene derivative and a polymer material according to the present invention, therefore, can exhibit a good proton conductivity in a wide temperature range including ordinary temperature, particularly, ranging from a high temperature of 160°C to a low temperature of -40°C.

### <Production of Carbon Cluster Derivative of Example 7>

Arc discharge was performed by applying a current of 200 A between both electrodes composed of carbon bars in 0.05 MPa of an argon, to thus obtain 1 g of a carbon powder. The carbon powder was mixed with 100 ml of 60% fuming sulfuric acid, and kept for three days in a nitrogen flow at 60°C. The heating was performed by using a water bath. The reaction solution was dropped little by little in 500 ml of pure water, and a solid matter was separated from the water solution by centrifugal separation method. The solid matter was cleaned several times by diethyl ether anhydride, and dried for five hours under a reduced pressure at 40°C. The resultant powder was dissolved in 10 ml of tetrahydrofurane (THF), an insoluble component removed by filtering, and the solvent was evaporated under a reduced pressure to obtain a solid matter wherein the solid matter of 50 mg was pressed at a force of 5 tons/cm² into a circular pellet having a diameter of 15 mm. Such a pellet is taken as a pellet of Inventive Example 7.

### Measurement of Proton Conductivity of Pellet of Carbon Cluster Derivative of Example 7

The AC impedance of the pellet of Inventive Example 7 was measured in a dry air in accordance with the same manner as described above. As a result, it was confirmed that an impedance behavior resulting from ion conductance appeared in a frequency region of 10 MHz or less. The conductivity of the pellet of Inventive Example 7 was calculated, on the basis of the diameter of a circular-arc curve of the impedance behavior, at 3.0X10⁻⁴ (S/cm).

### <Production of Carbon Cluster Derivative of Example 8>

Arc discharge was performed by applying a current of 200 Å between both electrodes composed of carbon bars in 0.05 MPa of an argon gas, to thus obtain 1 g of a carbon powder. The carbon powder was dissolved in toluene, an insoluble component was removed by filtering, and the solvent was evaporated under a reduced pressure to obtain a powder again. The resultant powder was mixed with 100 ml of 60% fuming sulfuric acid, and kept for three days under a nitrogen flow at 60°C. The heating was performed by using a water bath. The reaction solution was dropped little by little in 500 ml of pure water, and a solid matter was separated from the water solution by centrifugal separation method. The solid matter was cleaned several times by diethyl ether anhydride, and dried for five hours under a reduced pressure at 40°C. The solid matter of 50 mg was under a force of 7tons/ into a circular pellet of Inventive Example 8.

### <Measurement of Proton Conductivity of Pellet of Example 8>

The AC impedance of the pellet of Inventive Example 8 was measured in a dry air in accordance with the same manner as described above. As a result, it was confirmed that an impedance behavior resulting from ion conductance appeared in a frequency region of 10 MHz or less. The conductivity of the pellet of Inventive Example 8 was calculated, on the basis of the diameter of a circular-arc curve of the impedance behavior, at 3.4 × 10⁻⁴ (S/cm).

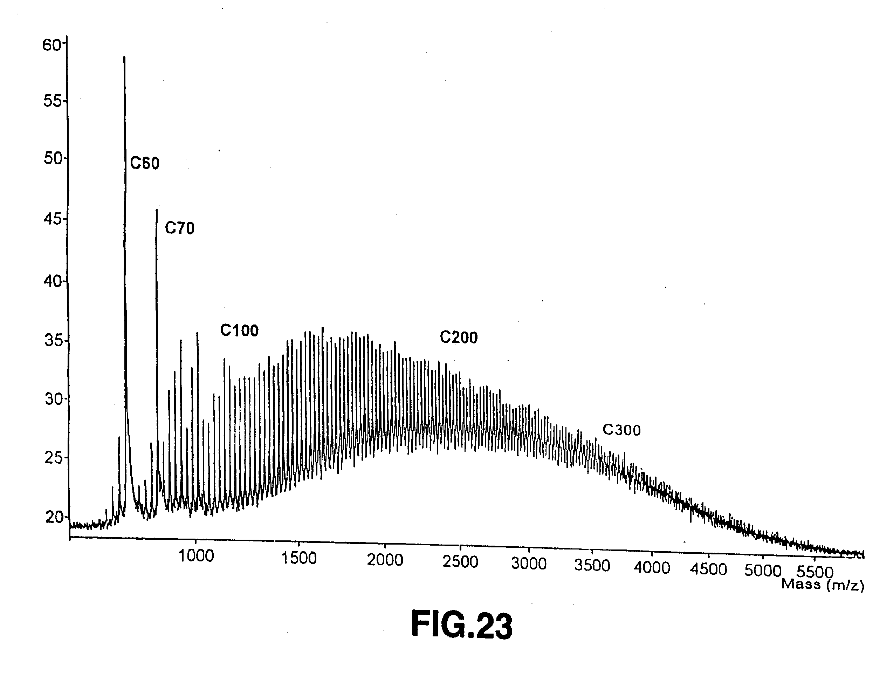

The main component of the carbon powder obtained by arc discharge was carbon clusters or molecules of carbon clusters not having a closed structure, such as, a cage structure, but having a structure at least part of which has open ends. In addition, molecules having a structure with a good electronic conductivity, similar to the graphite structure, which are slightly contained in the carbon cluster molecules, obstruct the function of the ionic treatment in Inventive Example 7 and directly after arc discharge in Inventive Example 8. As a result, it was confirmed by the AC impedance method that the pellet has no electronic conductivity. Fig. 23 shows the TOF-MS spectrum of [a] carbon powder obtained by arc discharge. As shown in Fig. 23, most of the carbon powder has a mass number of 5500 or less, that is, the carbon number of 500 or less. Since the carbon-carbon bonding distance of the carbon powder is less than 2 Å, the diameter of each of the carbon clusters of the powder is less than 100 nm.

Next, examples in which a tubular carbonaceous material is used as carbonaceous material.

### <Synthesis 1 of a Polyhydroxylated SWCNT Material>

A refined SWCNT material was prepared and then burned for ten hours at 250°C under a fluorine gas in order to obtain polyfluorinated SWCNT. The polyfluorinated SWCNT was placed in pure water and refluxed for three days at 100°C while being strongly stirred in order to substitute the fluorine atoms for hydroxyl groups thereby resulting in the polyhydroxylated SWCNT material which is identified as a material in Inventive Example 9.

### <Synthesis of Hydrogen Sulfated SWCNT>

Polyhydroxylated SWCNT produced in the same manner as that in Inventive Example 9 was placed in fuming sulfuric acid and stirred for three days at 60°C in order to replace the hydroxyl groups with the OSO₃H groups thereby resulting in the hydrogen sulfated SWCNT material as identified in Inventive Example 10.

### <Synthesis 2 of Polyhydroxylated SWCNT>

A refined SWCNT material was prepared and then subjected to oxygen plasma treatment. Then, the atmosphere in the chamber was replaced with hydrogen and the material was subsequently subjected to hydrogen plasma treatment in order to obtain the polyhydroxylated SWCNT material as identified as Inventive Example 11.

### <Production of Sample Films>

Each of the above three materials was dispersed in water and the dispersion was filtered on a filter paper having pores of 0.2 µm by suction in order to deposit the film on the filter paper. The amount of the dispersion to be filtered was adjusted to form the film having a thickness of 100 µm.

The film deposited on the filter paper could be easily peeled therefrom. These films thus obtained are taken as films in Inventive Examples 9,10 and 11. A material obtained by mixing the material in Inventive Example 10 with a hydrogen sulfated fullerene derivative at a weight ratio of 1: 1 was filtered in the same manner as described above to form a film as identified in Inventive Example 12. Further, an SWCNT material that contains no substituents was filtered in the same manner as described above to form the film which is identified as Comparative Example 4.

### <Measurement of Proton Conductivities of the Film>

To measure a proton conductivity of each of the films in Inventive Examples 9 to 12 and Comparative Example 4, both sides of the film were held between aluminum foils which were cut into a disc shape having a diameter 15 mm.

The disc was held between electrodes, and AC voltages (amplitude: 0.1 V) at frequencies ranging from 7 MHz to 0.01 Hz were applied to the film to measure a complex impedance at each frequency. The measurement was performed under a dry atmosphere.

The measurement result of the film in Comparative Example 4 will be described below. The complex impedance of the film was fixed at a low resistance, that is, was not changed over the above frequency range due to the fact that the electronic conductivity of the SWCNT material of Comparative Example 4 is high. As a result, it was revealed that the film in Comparative Example 4 cannot be used as an ionic conductor.

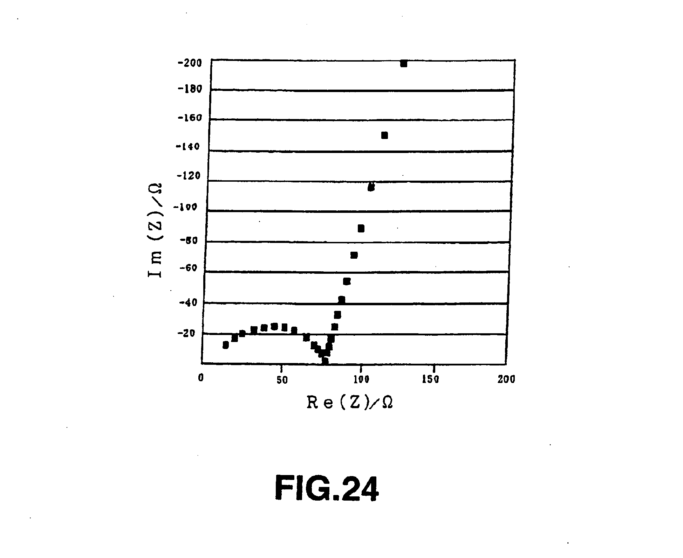

The measurement results of the films in Inventive Examples 9 - 12 will be described below. A complex impedance of the film of Inventive Example 10 is representatively shown in Fig. 24. Referring to Fig. 24, the impedance in a high frequency region depicts a flattened but very smooth semi-circular curve, which shows the conductance of some charged particles in the film and the imaginary number portion of the impedance is rapidly raised in a low frequency region, which shows the occurrence of the blocking of charged particles between the aluminum electrodes and the film as gradually nearing to a DC voltage. With respect to the blocking of the charged particles between the aluminum electrode and the film in Inventive Example 10, the charged particles on the aluminum electrode side are electrons, and accordingly, it is apparent that the charged particles in the film are not electrons or holes but ions, more specifically, protons in considering of the structure of the tubular carbonaceous derivative that forms the film. With respect to the films in Inventive Examples 9, 11 and 12, the behavior of these films are similar to that of the film in Inventive Example 10 as observed although there was a difference in the size of the circular arc therebetween. Accordingly, it was revealed that the films in Inventive Examples 9 - 12 desirably function as a tubular carbonaceous material derivative of a proton conductor.

With respect to the above impedance measurements, the proton conducting portion 1 of the film-like proton conductor constitutes an electrically equivalent circuit in which a capacitance is formed between first and second electrodes with a resistance in the proton conducting portion held therebetween as similarly identified in the previously discussed embodiments and as further illustrated in Fig. 17A. In addition, the capacitance designates a delay effect (phase delay at a high frequency) upon migration of protons, and the resistance designates a parameter of difficulty of migration of protons. The measured impedance Z is expressed by the equation, Z = Re (Z) + i - Im (Z). The frequency dependency on the proton conductivity portion was examined.

The conductivity of the above described charged particles can be calculated on the basis of an intercept of the circular-arc on the high frequency side of with the X-axis. The conductivity of the film in Inventive Example 10 is about 2 × 10⁻⁵ S/cm. The conductivities of the film in other Inventive Examples are different from one another as shown in Table 3.

**Table 3 Conductivities of proton conductor film of present invention (25°C)**

| Kind of film | Conductivity (S/cm) |
|---|---|
| Film of Inventive Example 9 | 2 × 10⁻⁷ |
| Film of Inventive Example 10 | 2 × 10⁻⁵ |
| Film of Inventive Example 11 | 7 × 10⁻⁸ |
| Film of Inventive Example 12 | 3 × 10⁻⁴ |

As it is apparent in Table 3, when the hydrogen sulfated functional groups to be introduced to the tubular carbonaceous material are replaced by the OSO₃H groups, the proton conductivity in the film tends to be large. The reason for this is that the OSO₃H groups cause ionization of hydrogen more easily than the hydroxyl groups. The results show that the aggregate of the tubular carbonaceous material derivative containing the hydroxyl groups and OSO₃H groups can exhibit, in a dry atmosphere, a good proton conductivity at ordinary temperature.

## Claims

1. An electrochemical device comprising a first electrode, a second electrode, and a proton conductor that is positioned between the first and second electrodes, the proton conductor comprising a carbonaceous material comprising a fullerene molecule into which proton dissociating groups are introduced.

2. The electrochemical device according to claim 1, wherein the ion conductivity of the proton conductor is larger than electron conductivity thereof.

3. The electrochemical device according to claim 1, wherein at least part of the fullerene structure has open ends.

4. The electrochemical device according to claim 1, wherein the proton dissociating groups are expressed by -XH where X represents an arbitrary atom or an atomic group that has a bivalent bond and where H represents a hydrogen atom.

5. The electrochemical device according to claim 4, wherein the proton dissociating groups are expressed by -OH or -YOH where Y is an arbitrary atom or an atomic group having a bivalent bond, and where O represents an oxygen atom.

6. The electrochemical device according to claim 4, wherein the proton dissociating groups are selected from the group consisting of, -OSO₃H, -COOH, -SO₃H, and - OPO(OH)₃.

7. The electrochemical device according to claim 1, wherein the proton dissociating groups and electron attractive groups are introduced in the carbonaceous material, wherein the electron attractive groups are selected from the group consisting of nitro groups, carbonyl groups, nitril groups, alkyl halide groups, and halogen atoms.

8. The electrochemical device according to claim 1, wherein the proton conductor comprises the carbonaceous material into which the proton dissociating groups are introduced and a polymer material.

9. The electrochemical device according to claim 8, wherein the polymer material has no electronic conductivity.

10. The electrochemical device according to claim 8, wherein the polymer material is at least one kind selected from polyfluoroethylene, polyvinylidene fluoride, and polyvinylalcohol.

11. The electrochemical device according to claim 8, wherein the proton conductor comprises the polymer material of 50 wt% or less.

12. The electrochemical device according to claim 8, wherein the polymer material comprises polytetrafluoroethylene of 3 wt% or less.

13. The electrochemical device according to claim 8, which is a thin film with a thickness of 300 µm or less.

14. The electrochemical device according to claim 1, wherein the first electrode and/or the second electrode are gas electrodes.

15. The electrochemical device according to claim 1, wherein the first electrode and/or the second electrode are electrodes including active materials.

16. The electrochemical device according to claim 1, which is a fuel cell.

17. The electrochemical device according to claim 1, which is a hydrogen-air cell.

## Patentansprüche

1. Elektrochemische Vorrichtung, umfassend eine erste Elektrode, eine zweite Elektrode und einen Protonenleiter, der sich zwischen den ersten und den zweiten Elektroden befindet, wobei der Protonenleiter ein kohlenstoffhaltiges Material umfasst, das ein Fullerenmolekül umfasst, in das protonendissoziierende Gruppen eingeführt sind.

2. Elektrochemische Vorrichtung nach Anspruch 1, wobei die Ionenleitfähigkeit des Protonenleiters größer als die Elektronenleitfähigkeit davon ist.

3. Elektrochemische Vorrichtung nach Anspruch 1, wobei mindestens ein Teil der Fullerenstruktur offene Enden aufweist.

4. Elektrochemische Vorrichtung nach Anspruch 1, wobei die protonendissoziierenden Gruppen durch -XH ausgedrückt sind, wobei X ein beliebiges Atom oder eine Atomgruppe darstellt, die eine bivalente Bindung aufweisen, und wobei H für ein Wasserstoffatom steht.

5. Elektrochemische Vorrichtung nach Anspruch 4, wobei die protonendissoziierenden Gruppen durch -OH oder -YOH ausgedrückt sind, wobei Y ein beliebiges Atom oder eine Atomgruppe mit einer bivalenten Bindung ist und wobei O für ein Sauerstoffatom steht.

6. Elektrochemische Vorrichtung nach Anspruch 4, wobei die protonendissoziierenden Gruppen aus der Gruppe bestehend aus -OSO₃H, -COOH, -SO₃H und -OPO(OH)₃ ausgewählt sind.

7. Elektrochemische Vorrichtung nach Anspruch 1, wobei die protonendissoziierenden Gruppen und elektronenziehende Gruppen in das kohlenstoffhaltige Material eingeführt sind, wobei die elektronenziehenden Gruppen aus der Gruppe bestehend aus Nitrogruppen, Carbonylgruppen, Nitrilgruppen, Alkylhalidgruppen und Halogenatomen ausgewählt ist.

8. Elektrochemische Vorrichtung nach Anspruch 1, wobei der Protonenleiter das kohlenstoffhaltige Material, in das die protonendissoziierenden Gruppen eingeführt sind, und ein Polymermaterial umfasst.

9. Elektrochemische Vorrichtung nach Anspruch 8, wobei das Polymermateial keine elektrische Leitfähigkeit aufweist.

10. Elektrochemische Vorrichtung nach Anspruch 8, wobei das Polymermaterial mindestens eines ist, ausgewählt unter Polyfluorethylen, Polyvinylidenfluorid, und Polyvinylalkohol.

11. Elektrochemische Vorrichtung nach Anspruch 8, wobei der Protonenleiter das Polymermaterial in 50 Gew.-% oder weniger umfasst.

12. Elektrochemische Vorrichtung nach Anspruch 8, wobei das Polymermaterial Polytetrafluorethylen in 3 Gew.-% oder weniger umfasst.

13. Elektrochemische Vorrichtung nach Anspruch 8, die ein dünner Film mit einer Dicke von 300 µm oder weniger ist.

14. Elektrochemische Vorrichtung nach Anspruch 1, wobei die erste Elektrode und/oder die zweite Elektrode Gaselektroden sind.

15. Elektrochemische Vorrichtung nach Anspruch 1, wobei die erste Elektrode und/oder die zweite Elektrode Elektroden sind, die aktive Materialien umfassen.

16. Elektrochemische Vorrichtung nach Anspruch 1, die eine Brennstoffzelle ist.

17. Elektrochemische Vorrichtung nach Anspruch 1, die eine Wasserstoff-Luft-Zelle ist.

## Revendications

1. Dispositif électrochimique comprenant une première électrode, une seconde électrode, et un conducteur de protons qui est positionné entre les première et seconde électrodes, le conducteur de protons comprenant une matière carbonée comprenant une molécule de fullerène dans laquelle des groupes de dissociation de protons sont introduits.

2. Dispositif électrochimique selon la revendication 1, dans lequel la conductivité ionique du conducteur de protons est plus grande que sa conductivité électronique.

3. Dispositif électrochimique selon la revendication 1, dans lequel au moins une partie de la structure de fullerène comporte des extrémités ouvertes.

4. Dispositif électrochimique selon la revendication 1, dans lequel les groupes de dissociation de protons sont exprimés par -XH où X représente un atome arbitraire ou un groupe atomique qui a une liaison bivalente, et où H représente un atome d'hydrogène.

5. Dispositif électrochimique selon la revendication 4, dans lequel les groupes de dissociation de protons sont exprimés par -OH ou -YOH où Y est un atome arbitraire ou un groupe atomique ayant une liaison bivalente et où O représente un atome d'oxygène.

6. Dispositif électrochimique selon la revendication 4, dans lequel les groupes de dissociation de protons sont choisis dans le groupe consistant en -OSO₃H, -COOH, -SO₃H et -OPO(OH)₃.

7. Dispositif électrochimique selon la revendication 1, dans lequel les groupes de dissociation de protons et les groupes électroattracteurs sont introduits dans la matière carbonée, où les groupes électroattracteurs sont choisis dans le groupe consistant en les groupes nitro, les groupes carbonyle, les groupes nitrile, les groupes halogénure d'alkyle et les atomes d'halogène.

8. Dispositif électrochimique selon la revendication 1, dans lequel le conducteur de protons comprend la matière carbonée dans laquelle les groupes de dissociation de protons sont introduits et un matériau polymère.

9. Dispositif électrochimique selon la revendication 8, dans lequel le matériau polymère n'a pas de conductivité électronique.

10. Dispositif électrochimique selon la revendication 8, dans lequel le matériau polymère est au moins un type choisi parmi le poly(fluoréthylène), le poly(fluorure de vinylidène) et le poly(alcool vinylique).

11. Dispositif électrochimique selon la revendication 8, dans lequel le conducteur de protons comprend le matériau polymère à hauteur de 50 % en poids ou moins.

12. Dispositif électrochimique selon la revendication 8, dans lequel le matériau polymère comprend du poly(tétrafluoroéthylène) à hauteur de 3 % en poids ou moins.

13. Dispositif électrochimique selon la revendication 8, qui est un film fin de 300 µm d'épaisseur ou moins.

14. Dispositif électrochimique selon la revendication 1, dans lequel la première électrode et/ou la seconde électrode sont des électrodes de gaz.

15. Dispositif électrochimique selon la revendication 1, dans lequel la première électrode et/ou la seconde électrode sont des électrodes incluant des matières actives.

16. Dispositif électrochimique selon la revendication 1, qui est une pile à combustible.

17. Dispositif électrochimique selon la revendication 1, qui est une pile à hydrogène-air.
